# EUROPÄISCHE PATENTANMELDUNG

(11) **EP 0 610 538 A1**
(43) Veröffentlichungstag der Anmeldung: **17.08.1994**
(21) Anmeldenummer: 93102218.0
(22) Anmeldetag: 12.02.1993
(51) Int. Cl.: F16L 37/084

(54) **Steckverbindung für Rohre, Schläuche oder dergleichen Rundkörper**

(71) Anmelder: Anton Hummel Verwaltungs-GmbH, D-79183 Waldkirch (DE)
(72) Erfinder: Gehring, Peter, W-7809 Simonswald (DE)
(74) Vertreter: Schmitt, Hans, Dipl.-Ing.

(57) **Zusammenfassung**

Eine Steckverbindung (1) für Rohre, Hülsen, (insbesondere harte) Schläuche oder dergleichen Rundkörper hat in einer Aufnahmehülse (3) einen oder mehrere Dichtringe (4), die in Gebrauchsstellung unter Druck an der Außenseite des Rohres (2) anliegen. Zur axialen Festlegung des Rohres (2) dient eine dem oder den Dichtringen (4) axial benachbarte, in den Innenquerschnitt der Aufnahmehülse (3) ragende beliebige Klemm-, Spann- oder sonstige Haltevorrichtung, z.B. eine in ihrem Innenbereich geschlitzte Haltescheibe (5), die von außen nach innen in Einsteckrichtung derart schräg orientiert ist, daß ein durch diese Haltescheibe (5) unter elastischer Verformung des Innenbereiches der Haltescheibe (5) eingestecktes Rohr (2) in axialer Richtung gegen Zurückziehen festgelegt ist. Dichtring (4) und Haltevorrichtung (5) sind einander benachbart angeordnet, wobei noch ein Druckring (6) zwischen diesen vorgesehen sein kann. Die in der Aufnahmehülse (3) zur Halterung und Abdichtung des Rohres (2) dienenden Teile werden mit einem Schraubring (7) festgelegt, so daß eine einfache Montage gegeben ist. Dieser Schraubring (7) kann nun aus der üblichen Montagestellung, in welcher durch einfaches Einstecken des Rohres (2) bereits die Dichtwirkung des Dichtringes (4) auftritt, in axialer Richtung tiefer in die Aufnahmehülse (3) eingeschraubt werden, wodurch der Dichtring (4) axial unter Druck gesetzt und so verformt wird, daß er in radialer Richtung stärker an die Rohraußenseite angepreßt wird. Dadurch wird die Dichtwirkung verbessert und auch für eine längere Lebensdauer wirksam gehalten, was vor allem bei unzugänglichen Montagen zum Beispiel unter Putz zweckmäßig ist. Ferner können auch zum Beispiel zwei Dichtringe hintereinander vorgesehen sein, um insbesondere durch die erwähnte Verpressung die Dichtwirkung weiter zu steigern.

## Beschreibung

Die Erfindung betrifft eine Steckverbindung für Rohre, Schläuche oder dergleichen Rundkörper mit mindestens einer Aufnahmehülse für das einzusteckende Rohrende, mit einer in den Innenquerschnitt der Aufnahmehülse ragenden beliebigen Halteeinrichtung, zum Beispiel eine am Innenrand fächerartig ausgebildete und/oder geschlitzte Haltescheibe, wobei der Haltebereich dieser beliebigen Klemm-, Spann- oder sonstigen Halteeinrichtung in Gebrauchsstellung in Einsteckrichtung des Rohres von innen nach außen aufweitbar ist und beim Zurückziehen des Rohres sperrt, und mit einem Dichtring, der der Halteeinrichtung axial benachbart angeordnet ist und in Gebrauchsstellung die Außenseite des eingesteckten Rohres dichtend beaufschlagt, wobei zur Halterung der Halteeinrichtung und des Dichtringes sowie einer gegebenenfalls dazwischen befindlichen Zwischenscheibe an oder in der Aufnahmehülse eine Bördelung oder ein in axialer Richtung wirksamer Schraubring vorgesehen sind.

Derartige Steckverbindungen sind als sogenannte Schnellverbindungen vor allem für Rohre bekannt, denn sie erlauben, das Rohrende in die Aufnahmehülse einzuschieben, um bereits die fertige und abgedichtete Verbindung herzustellen. Beispielsweise kennt man eine derartige Steckverbindung aus der US-A-4 895 395 oder der US-A-4 288 113.

Durch das Einschieben des Rohres wird bei diesen Beispielen eine Haltescheibe im Bereich ihres Innenrandes geringfügig verformt und aufgeweitet, wobei sie jedoch dem Einschieben aufgrund ihrer leichten Schrägstellung des inneren Randes gegenüber dem äußeren Rand diesem Einschieben praktisch keinen Widerstand entgegensetzt. Bei einer in entgegengesetzter Richtung wirkenden Zugkraft auf das Rohr krallt sie sich jedoch an dessen Oberfläche fest.

Durch das Einstecken des Rohrendes wird auch die erwähnte, in der Regel durch einen Dichtring gebildete Dichtung wirksam, so daß also sehr schnell eine weitgehend dichte Rohrverbindung hergestellt werden kann. Dabei ist der Innendurchmesser des Dichtringes in der Regel in Ausgangsstellung etwas kleiner als der Außendurchmesser des einzuschiebenden Rohrendes, so daß beim Einschieben des Rohres in die Aufnahmehülse die Dichtung aufgeweitet wird und dadurch den zum Abdichten erforderlichen Druck an der Außenseite des Rohres beziehungsweise an der Innenseite der Aufnahmehülse erhält.

Die Nachgiebigkeit derartiger Dichtringe ist begrenzt, denn wenn eine zu kleine Abmessung der Innenöffnung des Dichtringes gewählt ist, ist das Einschieben eines Rohres nicht mehr möglich, weil es mit seiner Stirnseite gegen einen solchen Dichtring anstoßen würde, so daß es nicht mehr in die Innenöffnung des Dichtringes eintritt und diesen aufweiten kann. Somit kann nur eine relativ geringe Anpressung der Dichtung an die Rohroberfläche bewirkt werden, so daß die Dichtigkeit gefährdet ist, insbesondere dann, wenn die Rohroberfläche beschädigt oder vor allem im Dichtbereich nicht genau rund ist, oder wenn das Rohr im stirnseitigen Bereich einen Grat oder eine scharfe Kante hat, wodurch die Dichtung beim Einschieben beschädigt werden könnte.

Es besteht deshalb die Aufgabe, eine Steckverbindung der eingangs erwähnten Art zu schaffen, bei welcher bei Bedarf eine ausreichende Dichtigkeit selbst dann erreicht oder gewährleistet wird, wenn der Dichtbereich des Rohres und/oder die Dichtung insbesondere in ihren gegenseitigen Berührbereichen Beschädigungen aufweisen.
Diese Steckverbindung soll als Anschlußstück, als Kupplungsstück sowie als Winkelstück, T-Stück, Y-Stück und in jeder beliebigen anderen Ausführung mit mindestens einem Steckanschluß versehen sein.

Die Lösung dieser Aufgabe besteht darin, daß der Schraubring von der Außenseite oder der Stirnseite der Aufnahmehülse her aus seiner Halte- und Gebrauchsstellung in axialer Richtung tiefer als diese Gebrauchsstellung in die Aufnahmehülse einschraubbar ist und daß dadurch der Dichtring axial unter Druck setzbar und verformbar und in radialer Richtung stärker an die Rohraußenseite anpressbar ist.

In vorteilhafter Weise kann also nach der Schnellverbindung durch Einstecken des Rohres in die Aufnahmehülse die dadurch bereits abgedichtete Steckverbindung bezüglich der Dichtigkeit verbessert beziehungsweise die Dichtigkeit durch ein stärkeres Anpressen des Dichtringes verstärkt werden, so daß Ungenauigkeiten oder Beschädigungen, die in der ersten Abdichtposition möglicherweise zu Undichtigkeiten führen würden, insofern unwirksam gemacht werden, weil die nun stärker angepresste Dichtung auch solche Verformungen ausfüllt. Gleichzeitig erhält dadurch diese Abdichtung eine größere Wirkdauer, selbst wenn der Dichtungswerkstoff im Laufe der Zeit ermüdet, was vor allem bei solchen Steckverbindungen vorteilhaft ist, die in unzugänglicher Weise zum Beispiel unter Putz verlegt sind. In scheinbar widersprüchlicher Weise wird also die Abdichtung, welche durch die Schnellverbindung funktionsgemäß zustande kommt, zusätzlich durch eine Verschraubung und Verpressung verstärkt. Der zum Fixieren der Halteeinrichtung und auch des Dichtringes dienende Schraubring erhält also insoweit eine Doppelfunktion, als er zusätzlich zu dieser Aufgabe, die Einzelteile der Steckverbindung funktionsgerecht zusammen zu halten, außerdem zum Verpressen des Dichtringes und somit zur Verstärkung der Dichtwirkung nach Durchführung der Steckverbindung dient. Dies wäre bei der Anordnung gemäß der US-PS-4 288 113 nicht möglich, weil ein Schraubring in Gebrauchsstellung unmittelbar an der Haltescheibe und über die Haltescheibe an einem festen Anschlag der Aufnahmehülse ansteht und keinerlei Wirkverbindung mit der Dichtung hat. Bei der US-PS-4 895 395 ist ein tieferes Einschrauben des Schraubringes ebenfalls entweder durch außenseitige Anschläge an der Aufnahmehülse oder durch Unzugänglichkeit ausgeschlossen.

Eine besonders zweckmäßige Ausgestaltung der Erfindung kann darin bestehen, daß der Schraubring in seiner Gebrauchsstellung - ohne zusätzliche Verpressung der Dichtung - über die zum Einstecken des Rohrendes dienende offene Stirnseite der Aufnahmehülse übersteht und in diesem überstehenden Bereich eine zum Angriff eines Werkzeuges geeignete Verformung, zum Beispiel wenigstens eine Schraubenschlüssel-Fläche, insbesondere einen Außenmehrkant oder -sechskant, gegebenenfalls stirnseitige Lochungen, hat. Eine weitere Ausgestaltung kann dabei darin bestehen, daß der Schraubring an seinem gegenüber der Aufnahmehülse überstehenden Bereich einen radial abstehenden Bund hat, dessen der Aufnahmehülse zugewandte Seite von der Stirnseite der Aufnahmehülse zumindest in Gebrauchsstellung der Dichtung ohne zusätzliche Verpressung einen Abstand hat, wobei dieser Bund insbesondere die Verformung für den Angriff eines Schraubwerkzeuges aufweist. In besonders zweckmäßiger Weise kann dabei der Schraubring und die Aufnahmehülse einen die axiale Verstellbarkeit des Schraubringes und damit der Verformung des Dichtringes begrenzenden Anschlag haben. Somit kann die nachträgliche Verpressung zur Verstärkung der Dichtwirkung auf ein Höchstmaß begrenzt werden, also eine zu starke Verpressung vermieden werden.

Besonders zweckmäßig und einfach ist es dabei, wenn der an der Außenseite des Schraubringes radial überstehende Bund und die Stirnseite der Aufnahmehülse als gegenseitiger begrenzender Anschlag vorgesehen sind und in Ausgangsstellung vor dem Verpressen des Dichtringes einen Abstand voneinander haben, der den größten gewünschten Verstellweg des Schraubringes beim Verpressen des Dichtringes entspricht. Auf diese Weise kann also der an dem Schraubring vorgesehene Bund eine zusätzliche Funktion erhalten.

Eine andere Möglichkeit besteht darin, daß der Anschlag zum Begrenzen der axialen Verstellbarkeit des Schraubringes beim Verpressen des Dichtringes im Inneren der Aufnahmehülse, beispielsweise in axialer Richtung hinter dem Gewinde zwischen Schraubring und Aufnahmehülse, vorgesehen ist. Dies kann vor allem zweckmäßig sein, wenn im stirnseitigen Bereich der Aufnahmehülse beengte Platzverhältnisse bestehen.

Es sei erwähnt, daß die Aufnahmehülse ein Innengewinde für einen in ihr Inneres einschraubbaren Schraubring oder ein Außengewinde für einen außen aufschraubbaren Schraubring aufweisen kann. Ein außen aufschraubbarer Schraubring, dessen Axialbewegung dennoch über entsprechende Vorsprünge und eventuelle Zwischenhülsen oder dergleichen auf einen im Inneren der Aufnahmehülse befindlichen Dichtring übertragen werden kann, ist für eine solche Verschraubung besonders gut zugänglich.

Zum Lösen der Steckverbindung kann eine in das Innere der Aufnahmehülse eingreifende Schiebehülse vorgesehen sein, mit deren innerer Stirnseite oder einem inneren Anschlag die Klemm- oder Spanneinrichtung - in bekannter Weise - von der Rohroberfläche nach außen aufweitbar ist. Wird eine solche Schiebehülse in die Aufnahmehülse tiefer eingeschoben und dadurch die Haltevorrichtung von der Rohroberfläche nach außen aufgeweitet, kann das Rohr zum Lösen der Steckverbindung herausgezogen werden. Bei zusätzlich verpreßter Dichtung ist zuvor durch eine kurze Drehbewegung des Schraubringes die Pressung zu lösen.

Eine Ausgestaltung der Erfindung von ganz erheblicher und vorteilhafter Bedeutung und eigener Schutzwürdigkeit kann darin bestehen, daß der Schraubring und die Aufnahmehülse einen überwindbaren Anschlag miteinander aufweisen, an welchem der Schraubring bei funktionsgerechter Steckverbindung in Gebrauchsstellung vor dem zusätzlichen Verpressen der Dichtung ansteht.

In der funktionsgerechten Gebrauchsstellung kann also in üblicher Weise ein Rohr in die Aufnahmehülse eingesteckt und durch Schnellverbindung in bekannter Weise fixiert werden, ohne daß der Dichtring versehentlich durch ein zu starkes Einschrauben des Schraubringes zu stark radial verformt ist. Erst nach Durchführung der Steckverbindung kann dann der Widerstand dieses überwindbaren Anschlages beim stärkeren Verpressen der Dichtung bewusst überwunden werden. Dadurch werden also Fehlbedienungen durch ein zu starkes vorzeitiges Verpressen des Dichtringes beispielsweise bei der ersten Montage der Aufnahmehülse noch vor dem Einstecken eines Rohres vermieden.

Eine besonders günstige Anordnung ergibt sich, wenn der überwindbare Anschlag als Stirnseite eines ringförmigen Klemmsitzes ausgebildet ist, welcher durch zwei in verpreßter Position des Dichtringes sich berührender Ringbereich an der Aufnahmehülse und dem Schraubring gebildet ist. Die beiden einen Press- oder Klemmsitz miteinander aufweisenden Ringbereiche stehen also zunächst mit ihren Rändern gegeneinander, wenn die Steckverbindung die erste Gebrauchsstellung hat, bei welcher der Dichtring zwar in üblicher Weise abdichten kann, aber noch nicht zusätzlich verpreßt ist. Diese Ausgangsstellung entspricht also der üblichen Anordnung bei einer Steckverbindung mit Aufnahmehülse und Schraubring, in der auch der Haltering und der Dichtring fixiert sind. Eine bewusste, den Widerstand beim Aufeinanderschieben des Klemmsitzes bewirkende tiefere Verschraubung des Schraubringes führt dann zu der gewollten Verpressung der Dichtung, so daß diese Maßnahme nicht versehentlich zur Unzeit, sondern nach dem Einstecken des Rohres erfolgen kann.

Weitere Ausgestaltungen bezüglich des überwindbaren Anschlages und des diesen bildenden Klemmsitzes sowie seiner Anordnung sind Gegenstand der Ansprüche 11 bis 13. Anspruch 11 gibt dabei eine Möglichkeit an, wie der Sitz einer Druck- oder Zwischenscheibe beziehungsweise des Dichtringes herangezogen werden kann, um den überwindbaren Anschlag und in axialer Fortsetzung den Klemmsitz dafür zu bilden.

Anspruch 13 gibt eine Möglichkeit an, diesen überwindbaren Anschlag beziehungsweise den zugehörigen Klemmsitz unabhängig von der Lagerung des Dichtringes, der Halteeinrichtung und eines Zwischenringes dazwischen zu machen.

Eine einfache Möglichkeit, die Vorteile eines überwindbaren Anschlages zu realisieren, kann auch darin bestehen, daß der überwindbare Anschlag in dem Gewinde von Schraubring und Aufnahmehülse vorgesehen ist. Dieses Gewinde dient also zunächst in normaler Weise dazu, den Schraubring in die Gebrauchsstellung zu bringen, in welcher in üblicher Weise durch Einschieben eines Rohres dieses festgelegt und auch schon abgedichtet wird. Die weitere Verschraubbarkeit des Schraubringes kann dann aber als überwindbarer Anschlag aus der genannten Position heraus schwergängig sein, also den schon vorerwähnten Widerstand beim tieferen Verschrauben des Schraubringes zur Verpressung der Dichtung bewirken.

Dabei kann als überwindbarer Anschlag an dem Schraubring mit Außengewinde oder an dem Schraubring mit Innengewinde an dem Gewindeende das Gewindeprofil zumindest teilweise, zum Beispiel am Außen-, Flanken- oder Kerndurchmesser mit Übermaß bzw. mit Untermaß als schwergängiger Bereich ausgeführt sein. Es stehen also mehrere Möglichkeiten zur Verfügung, einen zunächst für die normale Position der Steckverbindung noch nicht benutzten Gewindebereich durch entsprechende Über- oder Untermaße zu einem schwergängigen überwindbaren Anschlag zu machen, der dem Benutzer das Verpressen des oder der Dichtringe bewußt macht.

Anspruch 16 gibt eine Maßnahme an, wie ein an der Außenseite der Aufnahmehülse aufschraubbarer Schraubring mit wenigstens einem überwindbaren Anschlag zum Zusammenwirken mit der Aufnahmehülse ausgestattet werden kann.

Eine weitere, noch günstigere Ausgestaltung der Erfindung, die eine Fixierung der Position des Dichtringes erlaubt, in der er zwar abdichtet, aber noch nicht zusätzlich verpreßt ist, kann darin bestehen, daß wenigstens zwei überwindbare Anschläge unterschiedlicher radialer Abmessung in axialer Richtung derart hintereinander liegend angeordnet sind, daß beim Verschrauben des Schraubringes gegenüber der Aufnahmehülse zuerst der überwindbare Anschlag mit dem geringeren radialen Übermaß und danach insbesondere beim Verpressen der Dichtung der überwindbare Anschlag mit dem größeren radialen Übermaß und dem stärkeren Klemmsitz wirksam sind.

Der Einschraubring und/oder die Aufnahmehülse können also wenigstens zwei gegeneinader radial - geringfügig - abgestufte Bereiche haben, die jeweils gegenüber entsprechenden Gegenflächen ein Übermaß haben. Eine erste Ringfläche des Schraubringes hat dabei zunächst ein geringeres Übermaß, um die Verdrehung des Schraubringes schwergängig zu machen. Die zweite Ringfläche setzt einer weiteren Verschraubung noch größeren Widerstand entgegen, wobei der Dichtring zweckmäßiger Weise in seiner üblichen Gebrauchsstellung und Verformung ist, wenn die erstgenannte Ringfläche die Gegenfläche der Aufnahmehülse beaufschlagt.

Dadurch wird erreicht, daß die Ausgangsstellung der Steckverbindung gewissermaßen reibschlüssig festgelegt ist, also der Schraubring nicht durch Vibrationen oder dergleichen aus dieser "normalen" Position gelöst werden kann. Auf diese Weise wird also trotz der axialen Verstellbarkeit des Schraubringes die erste Dichtposition des Dichtringes fixiert. Dennoch kann der Dichtring nach dem Einstecken des Rohres durch ein stärkeres Anziehen des Schraubringes weiter verformt werden, bis der Schraubring beispielsweise an einen endgültigen oder festen Anschlag gelangt.

Der Schraubring kann also in zweckmäßiger und vorteilhafter Weise in Ausgangsstellung zum schnellen Verbinden mit einem Rohr durch dessen Einstecken in die Aufnahmehülse soweit verschraubt sein, daß er mit dem ersten überwindbaren Anschlag in Wirkverbindung beziehungsweise Klemmsitz ist, und der Verstellweg zum Verpressen der Dichtung - gegebenenfalls bis zum Erreichen des festen Anschlages - kann der Breite des zweiten, schwerer überwindbaren Anschlages, entsprechen. Dieses Prinzip könnte auch dadurch verwirklicht sein, daß eine erste schwergängige Verdrehbarkeit des Schraubringes innerhalb des Gewindes vorgesehen ist, und die Verstärkung des Widerstandes gegen ein Verschrauben zum Verpressen des Dichtringes durch einen in axialer Richtung zunächst noch nicht beaufschlagten, dann aber wirksam werdenden Klemmsitz erreicht wird.

Es sei an dieser Stelle erwähnt, daß es besonders zweckmäßig ist, wenn als Dichtring ein O-Ring vorgesehen ist. Dieser ist nicht nur preiswert, sondern kann innerhalb eines nutförmigen Sitzes beim Verpressen auch in gewünschter Weise verformt werden.

Die Ansprüche 20 und 21 geben Möglichkeiten zu vorteilhaften Ausgestaltungen der Erfindung an, die ein Verpressen des oder der Dichtringe erlaubt, ohne daß dabei die Klemm- oder Spanneinrichtung in Form einer Haltescheibe mitverschoben wird und eventuell die Rohroberfläche - insbesondere eines Kunststoffrohres - beschädigt. Die Maßnahmen der Ansprüche 20 und 21 erlauben nämlich eine relative Axialbewegung gegenüber der Haltescheibe, bis der axiale Anschlag wirksam wird. Wird also der Schraubring zum Verpressen des Dichtringes tiefer eingeschraubt, bleibt die Haltescheibe aufgrund ihrer Verkrallung mit der Oberfläche des eingesteckten Rohres unverschoben und beeinträchtigt die Rohroberfläche nicht. Wird dabei der Schraubring nicht bis zu dem Anschlag hin angezogen, ist zwar noch eine geringfügige Axialverstellung des Rohres zusammen mit der Haltescheibe bis zu dem Innenanschlag möglich, unter Umständen im Hinblick auf Wärmebewegungen und dergleichen aber sogar günstig.

Die die Haltescheibe aufnehmende Aussparung, entweder gemäß Anspruch 21 an dem Schraubring oder gemäß Anspruch 22 an dem Druckring, kann an ihrem freien Rand eine Umbördelung zum Begrenzen dieser Aussparung haben. Diese radial einwärts gerichtete Umbördelung kann angebracht werden, wenn die Haltescheibe in die Aussparung eingefügt ist, und kann dann ein ungewolltes Lösen der Haltescheibe verhindern beziehungsweise beim Herausschrauben der die Aussparung aufweisenden Schraubhülse eine Mitnahme der Haltevorrichtung ermöglichen.

Anspruch 24 enthält eine Ausgestaltung der Erfindung für den Fall, daß der Schraubring an der Außenseite der Aufnahmehülse in der Art einer Überwurfmutter angreift. Dadurch wird vor allem ermöglicht, daß der Dichtring in Einsteckrichtung im vorderen Bereich der Aufnahmehülse nahe deren Stirnseite vor der Klemm- oder Spanneinrichtung angeordnet werden kann. Dadurch ergibt sich vor allem die Möglichkeit, den Dichtring in Einsteckrichtung an der Aufnahmehülse vorne und die Haltevorrichtung tiefer in dieser Aufnahmehülse vorzusehen, so daß eine Verpressung der Dichtung ohne Verschiebung der Haltevorrichtung bewirkt werden kann. Wenn dabei eine Schiebehülse zum Lösen der Haltevorrichtung nicht untergebracht werden kann, kann die Steckverbindung dennoch durch Lösen des Schraubringes geöffnet werden, weil beim Herausziehen des Rohres dann die Haltevorrichtung mit herausgezogen werden kann.

Diesbezügliche weitere Ausgestaltungen sind in den Ansprüchen 25 und 26 enthalten. Die Fixierung der Halteeinrichtung und des Dichtringes durch Schraubring beziehungsweise Schraubhülse wird in diesem Falle voneinander unabhängig gemacht, so daß der O-Ring wiederum unabhängig von der Haltevorrichtung verpreßt werden kann. Selbstverständlich können auch dabei wie bei allen vorerwähnten Verschraubungsvorgängen eine oder mehrere Flächen vorgesehen sein, die der Verschraubung zunächst einen geringeren und dann einen stärkeren Widerstand entgegensetzen, also als überwindbare Anschläge wirken.

Während der preiswerteste Dichtring ein O-Ring ist, kann zum Zusammenwirken mit der Aufnahmehülse oder sonstigen Gegenstücken auch eine Formdichtung vorteilhaft sein. Dies gilt vor allem dann, wenn die Aufnahmehülse durch ein Anschlußstück gebildet ist, welches bereits besteht oder installiert ist, also beim Zusammenstellen der Steckverbindung vorausgesetzt und berücksichtigt werden muß. Solche Anschlußstücke haben in der Regel eine trichterförmige Einführung in ihre Innenhöhlung und in ihrem Inneren einen schrägen oder radial verlaufenden Absatz als inneren Anschlag.

Für das Zusammenwirken einer solchen Aufnahmehülse oder eines Anschlußstückes mit entsprechend gestalteter Stirnseite ist es zweckmäßig, wenn der Dichtring als Formdichtung einen Innendurchmesser hat, der gleich oder größer als der Außendurchmesser des einzusteckenden Rohres ist, und wenn an dieser Formdichtung wenigstens ein Ringwulst vorgesehen ist, dessen Innendurchmesser kleiner als der Rohraußendurchmesser ist. Der Ringwulst kann also in bekannter Weise beim Einstecken des Rohres die Abdichtung gegenüber der Rohraußenseite durchführen. Auf der anderen Seite kann die Formdichtung in ihrem übrigen Bereich radial verformt werden, wenn sie in die Aufnahmehülse oder das Anschlußstück eingebracht und gegen einen entsprechenden schrägen inneren Anschlag geschoben wird. Wäre die Formdichtung über ihre gesamte axiale Erstreckung mit dem Innenmaß versehen, welches an dem einzuschiebenden Rohr eine Anpreßkraft bewirkt, könnte dieses Rohr aufgrund des dann zu großen Widerstandes kaum eingesteckt werden.

Der Wulst kann an dem einsteckseitigen und/oder entgegengesetzten Rand der Formdichtung innenseitig gegenüber der Formdichtung vorspringend vorgesehen sein. Die Beaufschlagung durch das einzuschiebende Rohr entspricht dann der, die auch an einem O-Ring auftritt, dennoch kann aber der übrige Bereich der Formdichtung vor allem auch mit der Innenseite der Aufnahmehülse oder des Anschlußstückes dichtend zusammenwirken.

Diesem Dichtring als Formdichtung mit einem innenseitig angeordneten, an die Rohrabmessung angepaßten Ringwulst und einem axial dazu benachbarten Bereich größeren Innendurchmessers für eine leichte Einschiebbarkeit des Rohres kommt eigene schutzwürdige Bedeutung zu.

Weitere Ausgestaltungen dieses als Formdichtung ausgebildeten Dichtringes sind Gegenstand der Ansprüche 29 bis 33.

Anspruch 29 erlaubt dabei ein gutes Übergreifen der Außenseite dieses Dichtringes durch eine entsprechende Gegenfläche an einem Druckring oder einem entsprechenden konischen Ringbereich im Inneren der Aufnahmehülse. Die Schulterauflage hingegen kann wiederum als Anlagefläche für einen stirnseitigen Vorsprung eines Druckringes oder eines entsprechenden Ringbereiches in er Aufnahmehülse dienen.

Die Maßnahme von Anspruch 30 erleichtert dabei das Einfügen eines solchen Dichtringes in die Aufnahmehülse.

Eine besonders zweckmäßige Ausgestaltung eines solchen Dichtringes enthält Anspruch 31, dessen Maßnahme ein Festlegen der Dichtung innerhalb des Gewindes ermöglicht, ohne jedoch die Verpreßbarkeit zu behindern.

Anspruch 32 gibt weitere Möglichkeiten für die Formgebung des jeweiligen Querschnittes bzw. der Kontur eines solchen Dichtringes an, um vor allem das Zusammenwirken mit einem Druckring beim Verpressen zu verbessern und den gemäß Anspruch 33 radial nach innen überstehenden Bereich beim Verpressen entsprechend verformbar zu machen.

Eine weitere besonders vorteilhafte und schutzwürdige Ausgestaltung kann darin bestehen, daß der als Formdichtung ausgebildete Dichtring als überwindbarer Anschlag ausgebildet ist und insbesondere durch eine schräge Anschlagfläche des sie beaufschlagenden Druckringes und/oder durch die Anschlagfläche eines weiteren Druckringes in Wirkstellung übergriffen ist und in Endstellung nach dem Verpressen auf der unteren Anlage- oder Anschlagfläche aufsitzt. Der als Formdichtung ausgebildete Dichtring kann also so gestaltet sein, daß er beim Verpressen nicht nur den Widerstand aufgrund dieser Verformung hervorruft, sondern außerdem die Verschraubung zusätzlich durch die sich dabei jeweils gegenseitig beaufschlagenden Flächen schwergängig macht.

Die Dichtigkeit vor allem auch im Falle geringfügiger Verformungen oder Beschädigungen an der Rohraußenseite und/oder der Dichtung kann durch die Maßnahmen von Anspruch 35 sowie den sich anschließenden weiteren Ansprüchen 36 bis 46 weiter verbessert werden, weshalb die Maßnahme des Anspruches 35 auch eine ganz erhebliche eigenständige Schutzwirkung hat. Durch wenigstens zwei in axialer Richtung hintereinanderliegende Dichtringe werden nämlich zwei Dichtzonen geschaffen, so daß Undichtigkeiten noch besser vorgebeugt werden kann. Darüber hinaus kann beim Verpressen zweier Dichtringe die Presskraft besser verteilt werden und sich jeweils an dem Dichtring stärker auswirken und bemerkbar machen, der beispielsweise eine tiefergehende Beschädigung der Rohraußenseite in dem von ihm beaufschlagten Bereich ausgleichen und ausfüllen muß.

Die Ausgestaltung der Halterung dieser Dichtringe ist dabei vor allem deshalb bedeutungsvoll, weil beim Einschieben des Rohrendes und beim Verformen des in Einsteckrichtung vorderen Dichtringes der zweite Dichtring durch die dabei auftretende axiale Belastung mitverformt wird und das tiefere Einschieben des Rohres verhindert werden könnte, wenn diese Verformung zu einer zu starken radialen Verengung des zweiten Dichtringes führen würde. Dem wird durch die Merkmale und Maßnahmen der Ansprüche 36 bis 46 und dabei vor allem Anspruch 39 entgegengewirkt. Gleichzeitig werden diese Maßnahmen mit schrägverlaufenden Anlageflächen und Anschlagflächen bei der Verpressung der Dichtungen wirksam, so daß gezielt die eine oder andere Dichtung stärker verpreßt werden kann, sofern dies beispielsweise aufgrund entsprechender Dichtzonen an dem Rohr erwünscht ist.

Vor allem bei Kombination einzelner oder mehrerer der vorbeschriebenen sowie in den Ansprüchen enthaltenen Merkmale und Maßnahmen ergibt sich eine Schnellverbindung, bei der Rohre durch Einschieben und Einstecken in eine Aufnahmehülse mit dieser gekuppelt und abgedichtet werden können, wobei aber die Dichtwirkung durch ein stärkeres Verschrauben eines Schraubringes oder gegebenenfalls einer Schraubhülse verbessert und verstärkt werden kann, ohne daß zuvor beim Einschieben des Rohres die Dichtung durch einen zu weiten radialen Überstand nach innen beim Einschieben des Rohres hinderlich oder gar gefährdet ist.

Eine speziell gestaltete Formdichtung kann dabei aufgrund ihrer eigenständig erfinderischen Formgebung vor allem bei einer sogenannten Halbverschraubung die vorbeschriebenen Wirkungen verbessern und das Zusammenfügen der einzelnen Teile mit einer schon installierten Aufnahmehülse oder einem entsprechenden Anschlußstück zu erleichtern, so daß die erfindungsgemäße Schnellverbindung auch an schon installierten Anschlüssen realisiert werden kann. Ferner könnte diese besondere Formdichtung auch bei solchen Verbindungen in vorteilhafter Weise angewendet werden, die nicht als Steckverbindungen, sondern als reine Schraubverbindungen gestaltet sind.

Nachstehend sind Ausführungsbeispiele der Erfindung anhand der Zeichnung näher beschrieben. Als Darstellung der beliebigen Klemm-, Spann- oder sonstigen Haltevorrichtung, wurde zur Vereinfachung nur ein Anschlußstück mit Außengewinde und der bekannten Fächerscheibe als Halteeinrichtung dargestellt. Es zeigt in zum Teil schematisierter Darstellung, wobei in der Mehrzahl der Fälle nur eine Hälfte einer erfindungsgemäßen Steckverbindung und zwar im Längsschnitt, in einzelnen Fällen aber auch die gesamte Steckverbindung, dabei aber wiederum nur eine Hälfte im Längsschnitt gezeichnet ist.

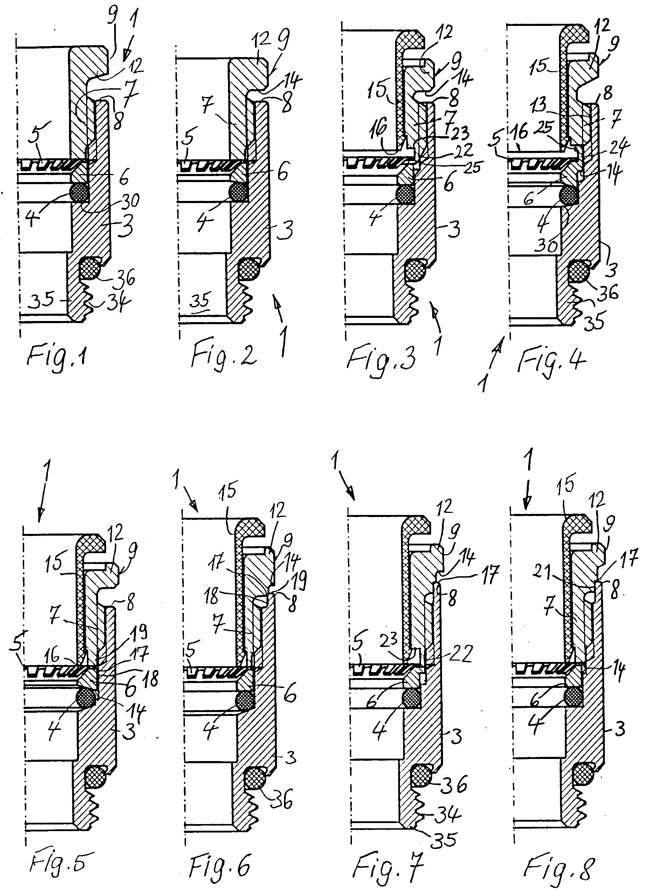

- Fig. 1: Eine einfache Steckverbindung, bei welcher der außen über die Aufnahmehülse überstehende und dort radial vergrößerte Schraubring im inneren der Aufnahmehülse mit seiner Stirnseite an der Haltescheibe anschlägt und zwischen dieser Haltescheibe und dem tieferliegenden Dichtring ein Zwischen- oder Druckring oder eine Zwischenscheibe angeordnet ist,
- Fig. 2: eine der Fig. 1 entsprechende Ausführungsform, bei welcher zwischen der radialen Verbreiterung des Schraubringes und der Stirnseite der Aufnahmehülse ein dem möglichen Verstellweg der Schraubhülse entsprechender Abstand zur Begrenzung der axialen Verstellung des Schraubringes vorgesehen ist,
- Fig. 3: eine Ausführungsform, bei welcher zum Lösen der Haltescheibe eine Schiebehülse vorgesehen ist und der Schraubring eine innere Aussparung zur Aufnahme der Haltescheibe hat, die eine axiale Verstellung des Schraubringes relativ zu der Haltescheibe also ohne axiale Mitnahme der Haltescheibe ermöglicht, wobei diese Aussparung an ihrem freien, dem Druckring und dem Dichtring zugewandten Ende durch eine die Haltescheibe erfassende Umbördelung begrenzt ist,
- Fig. 4: eine dem Ausführungsbeispiel nach Fig. 3 entsprechende Steckverbindung mit Schiebehülse, bei welcher der Zwischen- oder Druckring eine die Haltescheibe übergreifende, an dem Schraubring anschlagende Fortsetzung hat, die eine relative Axialbewegung dieses Druck- oder Zwischenringes gegenüber der Haltescheibe erlaubt, wobei der dem Schraubring zugewandte freie Rand der Fortsetzung dieses Zwischenringes eine Umbördelung zur Begrenzung der die Haltescheibe aufnehmende, an dieser Fortsetzung vorgesehenen Aussparung hat und wobei die Außenseite des Druckringes als Anschlag abgestuft ist und von einem Gegenanschlag im inneren der Aufnahmehülse - in axialer Richtung vor dem Sitz des Dichtringes - einen den Verschiebeweg beim Verpressen der Dichtung begrenzenden Abstand hat,
- Fig. 5: eine etwa dem Ausführungsbeispiel nach Fig. 2 entsprechende Anordnung der Steckverbindung mit Schiebehülse zum Lösen der Haltescheibe, wobei der Schraubring einen überwindbaren Anschlag an dem Sitz des zwischen Haltescheibe und Dichtring angeordneten Druckringes im inneren der Aufnahmehülse aufweist,
- Fig. 6: eine der Fig. 5 entsprechende Ausführungsform, bei welcher der überwindbare Anschlag zwischen Schraubring und Aufnahmehülse deren Stirnseite benachbart angeordnet ist, wobei der den überwindbaren Anschlag bildende Klemmsitz einerseits an der Innenseite des Nachbarbereiches der Stirnseite der Aufnahmehülse und andererseits an einem in eingeschraubter Position damit zusammenwirkenden außenseitigen Ringbereich einer Verlängerung und im Durchmesser vergrößerten Fortsetzung des Schraubringes angeordnet ist, und die Verschiebung der Klemmsitzflächen durch einen Anschlag zwischen der Durchmesservergrößerung des Schraubringes und der Stirnseite der Aufnahmehülse begrenzt ist,

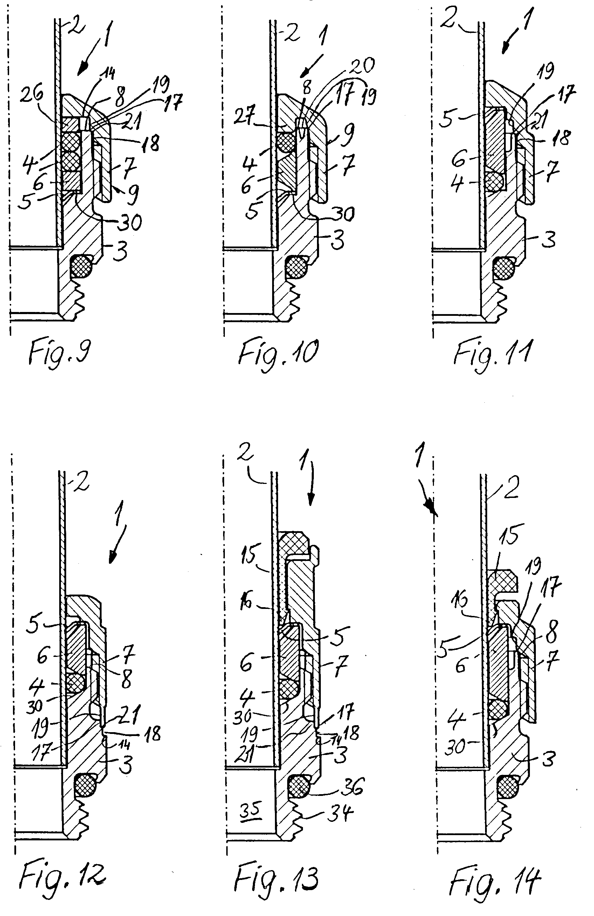

- Fig. 7: eine der Fig. 6 etwa entsprechende Ausführungsform, bei welcher zwei überwindbare Anschläge axial hintereinander nahe der Stirnseite der Aufnahmehülse vorgesehen sind, die unterschiedlich starke Widerstände gegen eine tiefere Verschraubung bewirken, wobei der erste Anschlag bereits überwunden ist und der Dichtring noch nicht verformt ist, so daß die Schraubhülse gegen eine ungewollte Lockerung in dieser ersten Montagestellung gesichert ist,
- Fig. 8: eine der Fig. 7 etwa entsprechende Ausführungsform mit zwei hintereinanderliegenden überwindbaren Anschlägen, wobei der die größtmögliche axiale Verstellung des Schraubringes begrenzende feste Anschlag im inneren der Aufnahmehülse an einer Abstufung des Sitzes des Druckringes vorgesehen ist und mit der Stirnseite des Schraubringes zusammenwirkt,
- Fig. 9 bis Fig. 14: unterschiedliche Ausführungsbeispiele, bei denen der Schraubring die Außenseite der Aufnahmehülse wenigstens teilweise übergreift, die Außenhülse ein Außengewinde hat und der Schraubring an diesem Außengewinde mit einem Innengewinde angreift, wobei im einzelnen zeigt:
- Fig. 9: eine Anordnung mit einem als Überwurfmutter gestalteten Schraubring, dessen radial einwärts gegen das Rohr über den Innenquerschnitt der Aufnahmehülse überstehender Bereich einen ersten Druckring beaufschlagt, der seinerseits an einem Dichtring anschlägt, an welchem in diesem Ausführungsbeispiel ein zweiter Dichtring anliegt, bevor der Druckring und dann die Haltescheibe koaxial hintereinander angeordnet sind, wobei der erste Druckring beim Verschrauben des Schraubringes in die Aufnahmehülse axial bewegbar ist und wobei an der der Stirnseite der Aufnahmehülse unmittelbar benachbarten Außenseite der Aufnahmehülse überwindbare Anschläge gegenüber dem Schraubring vorgesehen sind,
- Fig. 10: eine der Fig. 9 entsprechende Ausführungsform, bei welcher der Schraubring selbst einen koaxial in die Aufnahmehülse eingreifenden Vorsprung zum axialen Verpressen der Dichtung hat,
- Fig. 11: eine den Fig. 9 und 10 etwa entsprechende Ausführungsform, wobei die Haltescheibe in axialer Einsteckrichtung vor dem Druckring und dem axial dahinter befindlichen Dichtring angeordnet ist,
- Fig. 12: eine der Fig. 11 entsprechende Ausführungsform, bei welcher der oder die überwindbaren Anschläge von der Stirnseite der Aufnahmehülse in einen rückwärtigen Bereich verlegt sind und die Gegenfläche an dem Schraubring an einer axialen Fortsetzung des Gewindebereiches des Schraubringes angeordnet ist,
- Fig. 13: eine der Fig. 12 entsprechende Ausführungsform, bei welcher der Schraubring eine der Einsteckrichtung entgegengesetzte Verlängerung zur Aufnahme einer Schiebehülse hat,
- Fig. 14: eine Ausführungsform mit einem überwurfmutterartigen Schraubring und einer kurzen Schiebehülse, wobei die überwindbaren Anschläge wiederum der Stirnseite der Aufnahmehülse benachbart sind,
- Fig. 15 bis Fig. 19: Ausführungsbeispiele, bei denen mit dem Gewinde der Aufnahmehülse eine Schraubhülse verschraubbar ist, die einen oder mehrere Dichtringe in axialer Richtung beaufschlagt und zu deren Verpressung dient und in welcher der Schraubring wiederum in axialer Richtung verschraubbar angeordnet ist und die Haltescheibe gegenüber der Innenseite der Schraubhülse fixiert, dabei im einzelnen:

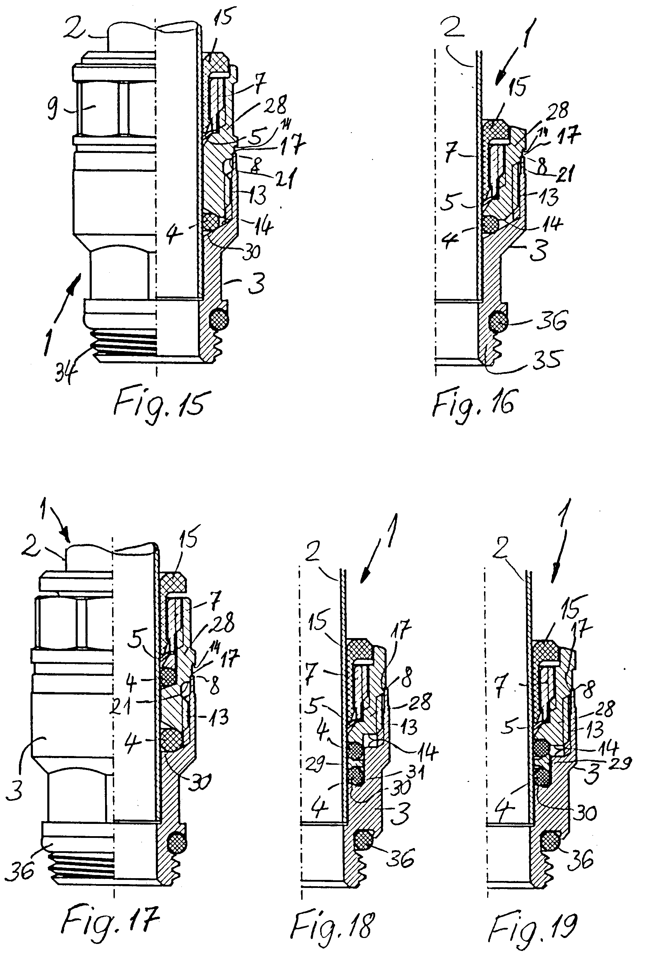

- Fig. 15: eine Anordnung, bei welcher der den Schraubring enthaltende Bereich der Schraubhülse außerhalb der Aufnahmehülse angeordnet ist,
- Fig. 16: eine in axialer Richtung verkürzte Anordnung, bei welcher der Schraubring in einem in die Aufnahmehülse eingreifenden Bereich der Schraubhülse angeordnet ist, so daß sich eine radiale Vergrößerung ergibt,
- Fig. 17: eine der Fig. 15 entsprechende Anordnung, bei welcher der Schraubring innerhalb der Schraubhülse über die von ihm beaufschlagte Haltescheibe und einen Druckring einen weiteren Dichtring beaufschlagt,
- Fig. 18: eine etwa der Fig. 16 entsprechende Anordnung, wobei zwei Dichtringe axial nebeneinander liegen und zwischen ihnen ein Druckring angeordnet ist, sowie

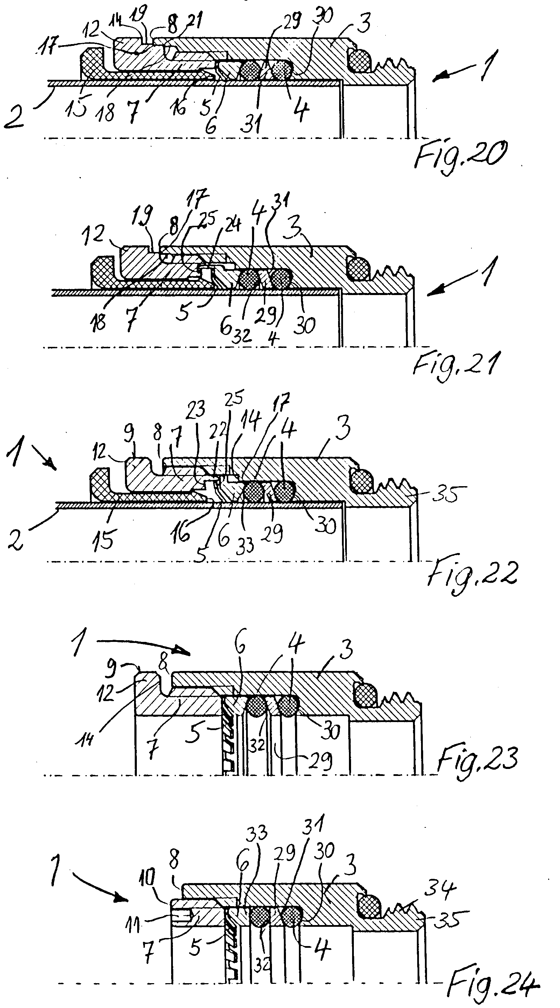

- Fig. 19: eine der Fig. 18 entsprechende Ausführungsform, bei welcher der Druckring zwischen den beiden Dichtringen abgewandelt gestaltet ist,
- Fig. 20 bis Fig. 30: verschiedene Ausführungsformen, bei denen jeweils zwei Dichtringe koaxial in Einsteckrichtung hintereinander angeordnet und dabei unterschiedlich gehalten sind, im einzelnen:
- Fig. 20: eine Steckverbindung mit zwei koaxial hintereinanderliegenden Dichtringen, wobei die Anlagefläche für den in Einsteckrichtung tieferen Dichtring schräg in dem Sinne nach außen verläuft, daß gegenüber dem Rohr ein Hinterschnitt gebildet ist, und wobei der Druckring zwischen den beiden Dichtringen einen trapezförmigen Querschnitt hat, der sich von der Rohroberseite radial nach außen verjüngt,
- Fig. 21: eine etwa der Fig. 20 entsprechende Ausführungsform, bei welcher die Haltescheibe in einer Aussparung eines Fortsatzes des ihr benachbarten Druckringes angeordnet ist, und der Druckring zwischen den beiden Dichtringen beidseitig schräge Anlageflächen hat, so daß der in Einsteckrichtung des Rohres tieferliegende Dichtring in einer sich von innen radial nach außen trapezförmig erweiternden Ringnut und der in Einsteckrichtung vordere Dichtring in einer sich von innen radial nach außen trapezförmig verjüngenden Ringnut liegen,
- Fig. 22: eine der Fig. 21 entsprechende Anordnung, wobei die überwindbaren Anschläge gegenüber Fig. 21 von der Stirnseite der Aufnahmehülse nach innen in den Bereich des Sitzes für die Dichtungen verlegt sind und die Haltescheibe von einer Aussparung an der Schraubhülse außenseitig umgriffen ist,
- Fig. 23: eine Anordnung mit zwei Dichtringen, bei welcher zur Begrenzung der Verstellbarkeit des Schraubringes gegenüber der Aufnahmehülse ähnlich wie bei Fig. 22 ein begrenzter Abstand zwischen der Stirnseite der Aufnahmehülse und einem überstehenden Bund des Schraubringes vorgesehen ist und im inneren der Aufnahmehülse ein überwindbarer Anschlag die Ausgangsstellung vor dem Verpressen der Dichtringe festlegt,

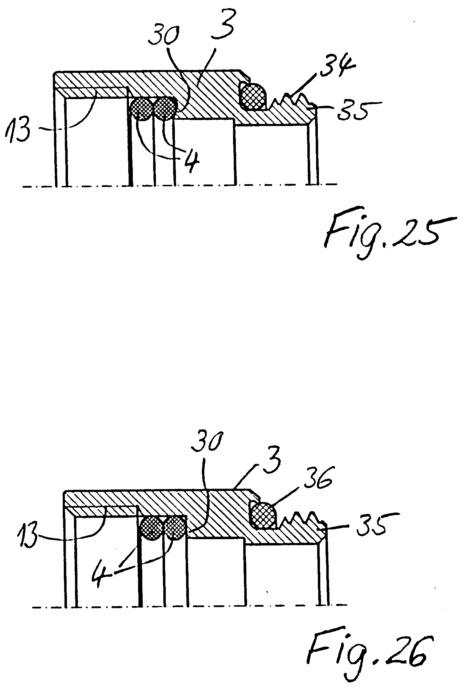

- Fig. 24: eine vereinfachte Ausführungsform, bei welcher kein Anschlag für den Schraubring vorgesehen ist und dieser auch keinen überstehenden Bund, jedoch für seine axiale Verstellung stirnseitige Lochungen hat,
- Fig. 25: eine Aufnahmehülse mit zwei sich unmittelbar berührenden Dichtringen - ohne den noch einzufügenden Schraubring und ohne die Haltescheibe - wobei der in Einsteckrichtung tieferliegende Dichtring an einer schrägen Anlagefläche anliegt, deren Schräge gegenüber dem einzusteckenden Rohr einen Hinterschnitt bildet,

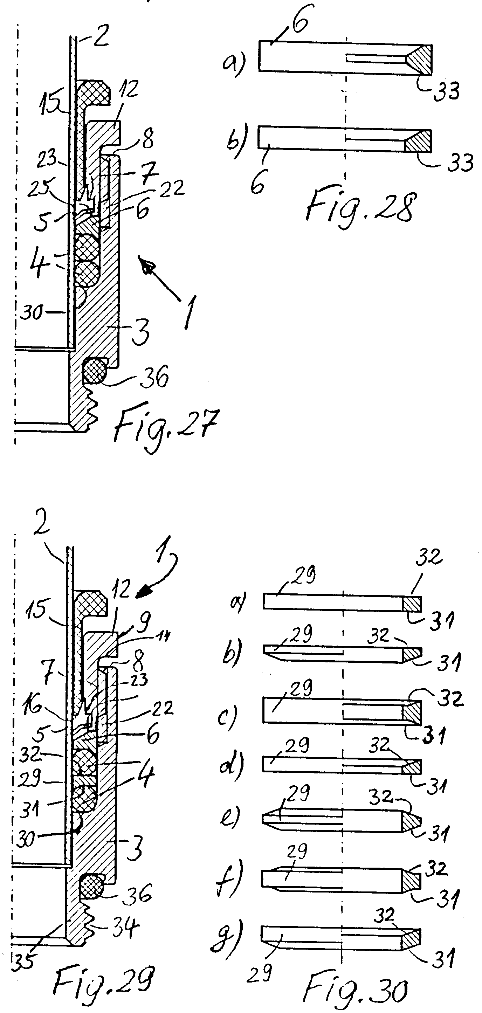

- Fig. 26: eine der Fig. 25 entsprechende Ausführungsform und Darstellung, wobei der in Einsteckrichtung tieferliegende Dichtring an einer Anlagefläche anliegt, die in einer rechtwinkelig zur Mittelachse verlaufenden Radialebene liegt,
- Fig. 27: eine Steckverbindung, bei welcher zwei Dichtringe einander unmittelbar berühren, wobei der Schraubring eine die Haltescheibe übergreifende und mittels einer Bördelung in axialer Richtung festlegende Aussparung hat und der vor beiden Dichtringen befindliche Druckring gegenüber dem in Einsteckrichtung vorderen Dichtring eine teilweise schräge, teilweise radial orientierte Anschlagfläche hat,

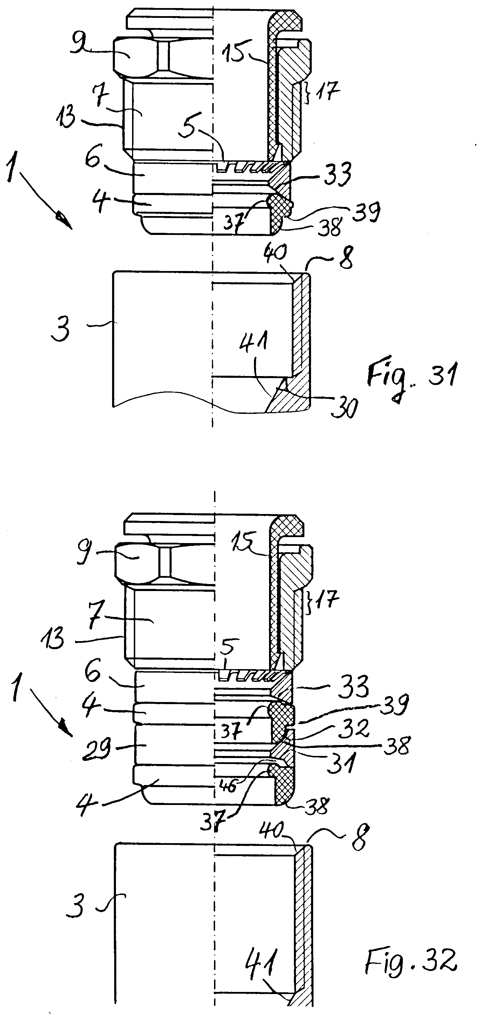

- Fig. 28 a und b: zwei in der Ausführungsform nach Fig. 27 oder 29 wahlweise einsetzbare Druckringe mit unterschiedlichen Anschlagflächen für den unmittelbar beaufschlagten Dichtring,
- Fig. 29: eine gegenüber Fig. 28 dadurch abgewandelte Ausführungsform, daß zwischen den beiden Dichtringen ein weiterer Druckring angeordnet ist,
- Fig. 30 a bis g: mehrere zwischen zwei Dichtringen einsetzbare Druckringe mit jeweils unterschiedlichem Querschnitt, die auch bei den Ausführungsbeispielen gemäß Fig. 20 bis 24 anwendbar sind,
- Fig. 31: eine noch nicht zusammengefügte Steckverbindung, bei welcher die Aufnahmehülse beispielsweise als fest installiertes Teil oder sonstiges Kupplungsstück mit Innengewinde gestaltet ist, welches durch Einsetzen von Dichtring, Druckring, Haltescheibe und Schraubring sowie ggf. Schiebehülse zur Steckverbindung wird, wobei ein Dichtring als Formdichtung vorgesehen ist,
- Fig. 32: eine der Fig.31 entsprechende Darstellung mit einem in eine zum Beispiel fest installierte Aufnahmehülse oder dergleichen Anschlußstück einsetzbaren Schraubring, gem. Fig.31, wobei die Aufnahmehülse - wie bei Fig.31 - ein Innengewinde hat und in axialer Richtung zwei als Formdichtungen ausgebildete Dichtringe hintereinanderliegend, aber durch einen dazwischen befindlichen Druckring getrennt vorgesehen sind,

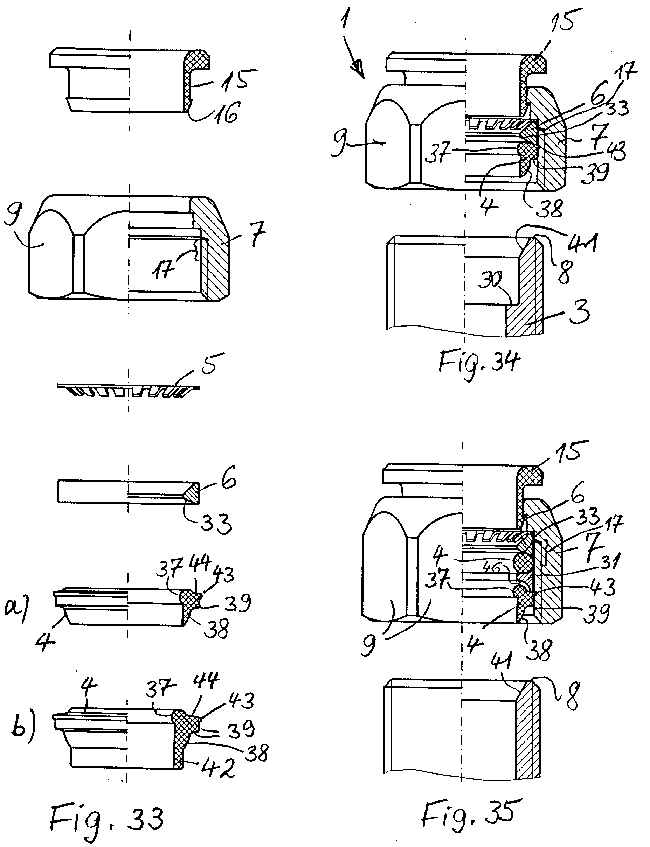

- Fig. 33 a und b: in Explosionsdarstellung einen als Überwurfmutter gestalteten Schraubring mit Innengewinde und die zur Steckverbindung gehörenden weiteren Teile, insbesondere Haltescheibe, Druckring und Dichtring, für eine Aufnahmehülse oder ein fest installiertes Anschlußstück, welches ein Außengewinde hat,
- Fig. 34: den mit Innengewinde versehenen Schraubring gem. Fig.33 mit den eingefügten Halteteilen der Steckverbindung vor dem Aufschrauben auf eine Aufnahmehülse oder auf ein Anschlußstück, wobei ein einziger Dichtring vorgesehen und als Formdichtung ausgeführt ist,

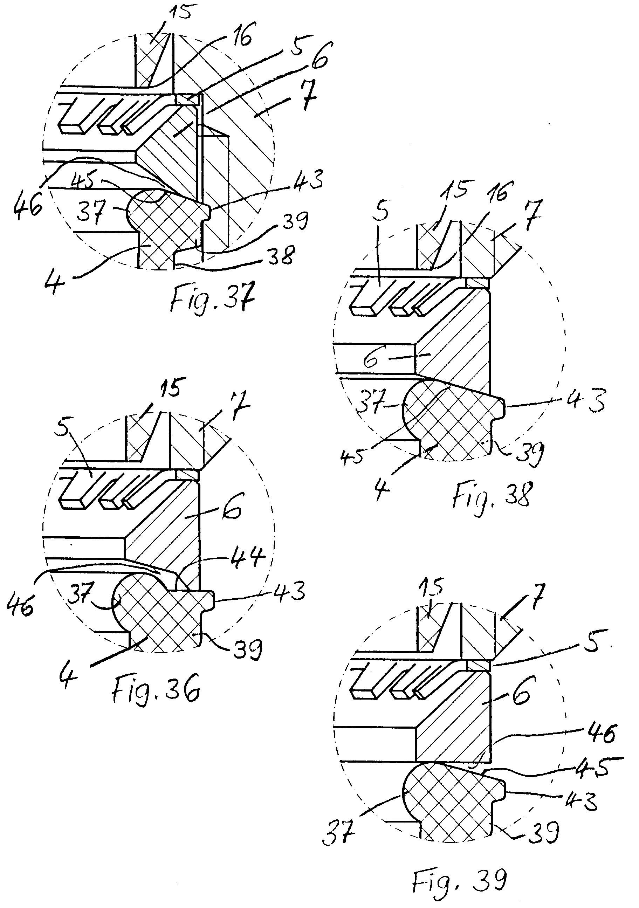

- Fig. 35: eine der Fig.34 entsprechende Darstellung, wobei zwei Dichtringe vorgesehen sind, deren einer ein O-Ring und deren anderer eine Formdichtung sind,
- Fig. 36: in stark vergrößertem Maßstab im Längsschnitt eine Einzelheit an einer Steckverbindung für eine Aufnahmehülse mit Innengewinde, wobei der Längsschnitt ein Endstück des Schraubringes, die Haltescheibe, den Druckring und einen als Formdichtung gestalteten Dichtring (teilweise) zeigt und der Druckring mit einem radial außen liegenden Ringvorsprung seiner Anschlagfläche, also teilweise an dem Dichtring anliegt,
- Fig. 37: eine Einzelheit in analoger Darstellung zu Fig.36 jedoch für eine Aufnahmehülse mit Außengewinde, bei welcher der Schraubring als Überwurfmutter gestaltet ist und ein radial außen liegender Bereich des Druckringes an dem Dichtring - vor der Verpressung - anliegt,
- Fig. 38: eine etwa der Fig.36 entsprechende Darstellung und Ausführungsform, bei welcher jedoch der Dichtring an dem Druckring praktisch über seine gesamte von außen nach innen führende Schrägfläche, also sowohl im radial äußeren, als auch im mittleren als auch im radial inneren Bereich anliegt, sowie
- Fig. 39: eine Ausführungsform, bei welcher der Dichtring und seine dem Druckring zugewandte schräge Übergangsfläche etwa der der Fig.38 entspricht, der Druckring aber eine derartig abgewandelte Anschlagfläche hat, daß die Berührung nur im radial innen liegenden Bereich des Dichtringes erfolgt und in radialer Richtung nach außen in Ausgangsstellung ein sich erweiternder Ringspalt vorgesehen ist.

Alle in der vorangegangenen Figurenaufzählung erwähnten und nachstehend beschriebenen Ausführungsbeispiele zeigen jeweils eine im ganzen mit 1 bezeichnete Steckverbindung für Rohre 2 in ihrer Gebrauchsstellung, in welcher also eine Schnellverbindung einer Aufnahmehülse 3 mit dem Rohr 2 durchführbar oder durchgeführt ist und ein oder mehrere Dichtringe 4 diese Verbindung abdichten. Zusätzlich sind Maßnahmen vorgesehen, um bei diesen dargestellten Ausführungsbeispielen aus dieser Gebrauchsstellung heraus eine Verstärkung der Dichtwirkung erzielen zu können. Dabei erhalten bezüglich ihrer Funktion im wesentlichen übereinstimmende Teile auch bei unterschiedlicher Gestaltung jeweils ein übereinstimmendes Bezugszeichen.

Alle Ausführungsbeispiele zeigen, wie bereits erwähnt, eine Steckverbindung 1 für Rohre 2, die auch aus Kunststoff bestehen können. Zu der Steckverbindung 1 gehört die Aufnahmehülse 3 für das einzusteckende Rohrende und eine in den Innenquerschnitt der Aufnahmehülse 3 ragende beliebige Haltevorrichtung, z.B. eine am Innenrand insbesondere fächerartig ausgebildete und/oder geschlitzte Haltescheibe 5, deren Haltebereich, wie in mehreren Figuren deutlich erkennbar, in Gebrauchsstellung in Einsteckrichtung des Rohres 2 von außen nach innen schräg orientiert ist, so daß also das Rohr 2 trotz der in den Innenquerschnitt der Aufnahmehülse 3 ragenden Haltescheibe 5 durch diese hindurchgeschoben werden kann. Die Fächerform beziehungsweise Schlitzung dieses inneren Bereiches erlaubt ein federndes Ausweichen dieses Bereiches der Haltescheibe 5, während jedoch ein Zurückziehen des Rohres 2 gesperrt wird.

Zu der Steckverbindung 1 gehört ferner wenigstens ein Dichtring 4, der der Halteeinrichtung 5 benachbart angeordnet ist und in Gebrauchsstellung, wie sie in den Ausführungsbeispielen jeweils dargestellt ist, die Außenseite des eingesteckten Rohres 2 dichtend beaufschlagt, wobei zur Halterung der Halteeinrichtung 5 und des Dichtringes 4 sowie einer in mehreren Ausführungsbeispielen dazwischen befindlichen Zwischenscheibe oder eines Druckringes 6 an oder in der Aufnahmehülse 3 ein in axialer Richtung wirksamer Schraubring 7 vorgesehen ist. Nachdem also Dichtring 4, Halteeinrixhtung 5 und ein eventueller Druckring 6 in die Aufnahmehülse eingelegt sind, können diese Teile mit dem Schraubring 7 in ihrer Gebrauchsstellung festgelegt werden.

Dieser Schraubring 7, der die einzelnen, im inneren der Aufnahmehülse 3 befindlichen Teile, also insbesondere die Halteeinrichtung 5 und den Dichtring 4 festlegt, erhält bei allen Ausführungsbeispielen noch eine zusätzliche Funktion dadurch, daß er von der Außenseite oder der Stirnseite 8 der Aufnahmehülse 3 her aus seiner Halte- und Gebrauchsstellung in axialer Richtung tiefer als diese Gebrauchsstellung in die Aufnahmehülse 3 einschraubbar ist, so daß dadurch der oder die Dichtringe 4 axial unter Druck gesetzt und verformt werden und in radialer Richtung stärker an die Rohraußenseite anpressbar sind. In der Gebrauchsstellung ist zwar bereits durch den Dichtring 4 eine Abdichtung gegeben. Durch die zusätzliche tiefere Verschraubung des Schraubringes 7 kann nun aber die Dichtwirkung in vorteilhafter Weise verstärkt werden beziehungsweise es können eventuelle Beschädigungen oder Ungenauigkeiten in der Dichtzone des Rohres 2 dadurch ausgeglichen werden, daß der Dichtring 4 stärker anpreßbar ist.

Auf diese Weise können auch im Verlaufe der Zeit später, zum Beispiel lange Zeit nach der Montage, auftretende Undichtigkeiten auf einfache Weise wieder behoben werden. Umgekehrt kann solchen Undichtigkeiten, die zum Beispiel auch durch Materialermüdung auftreten könnten, dadurch vorgebeugt werden, daß der Dichtring 4 von vornherein gegenüber seiner normalen Gebrauchsstellung stärker verpreßt wird.

In allen Ausführungsbeispielen ist vorgesehen, daß der Schraubring 7 in seiner Gebrauchsstellung ohne zusätzliche Verpressung des Dichtringes 4 (die in allen Zeichnungen dargestellt ist) über die zum Einstecken des Rohrendes dienende offene Stirnseite 8 der Aufnahmehülse 3 übersteht und in diesem überstehenden Bereich eine zum Angriff eines Werkzeuges geeignete Verformung, zum Beispiel wenigstens eine Schraubenschlüssel-Fläche, insbesondere einen Außenmehrkant oder - sechskant 9 hat. In Fig. 24 ist eine demgegenüber abgewandelte Anordnung erkennbar, bei welcher als Verformung für den Angriff eines Werkzeuges an der außenliegenden Stirnseite 10 des Schraubringes 7 Lochungen 11 vorgesehen sind. In einem solchen Falle, in welchem der Schraubring 7 stirnseitige Lochungen 11 für den Angriff eines zum Verdrehen und Verschrauben dienenden Werkzeuges hat, könnte auch ein Schraubring 7 Verwendung finden, der in Gebrauchsstellung nicht über die Stirnseite 8 nach außen vorsteht, sondern mit dieser bündig abschließt oder sogar tieferliegt.

In den Ausführungsbeispielen gemäß den Fig. 1 bis 8, 20 bis 23 sowie 27 und 29 hat der Schraubring 7 an seinem gegenüber der Aufnahmehülse 3 überstehenden Bereich einen radial abstehenden Bund 12, dessen die Aufnahmehülse 3 zugewandte Seite von der Stirnseite 8 der Aufnahmehülse 3 zumindest in Gebrauchsstellung des Dichtringes 4 ohne zusätzliche Verpressung einen Abstand hat, wobei der Bund 12 in diesen Ausführungsbeispielen auch die Verformung für den Angriff eines Schraubwerkzeuges aufweisen kann. Der Abstand zu der Stirnseite 8 ermöglicht es, diesen für den Angriff eines Werkzeuges vorteilhaften Bund 12 vorzusehen, ohne daß er das tiefere Einschrauben des Schraubringes 7 in die Aufnahmehülse 3 beim Verpressen des Dichtringes 4 behindert.

Damit keine zu starke Verpressung möglich ist, hat der Schraubring 7 und die Aufnahmehülse 3 einen die axiale Verstellbarkeit des Schraubringes 7 und damit der Verformung des Dichtringes 4 begrenzenden, im folgenden jeweils näher erläuterten, Anschlag, d.h. nach einer bestimmten axialen Verstellung des Schraubringes 7 durch tieferes Einschrauben in die Aufnahmehülse 3 wird durch ein gegenseitiges Anschlagen ein weiteres Einschrauben verhindert, wobei zweckmäßigerweise jeweils feste Ringbereiche einerseits des Schraubringes 7 und andererseits der Aufnahmehülse 3 als gegenseitige Anschläge wirksam werden.

Beispielsweise bei den Anordnungen gemäß Fig.2, 3, 5, 6 und 7, aber auch weiteren Ausführungsbeispielen ist vorgesehen, daß der an der Außenseite des Schraubringes 7 radial überstehende Bund 12 und die Stirnseite 8 der Aufnahmehülse 3 als gegenseitiger begrenzender Anschlag vorgesehen sind und in Ausgangsstellung vor dem Verpressen des Dichtringes 4, also in der in diesen Figuren dargestellten Position, einen Abstand voneinander haben, der dem größten gewünschten Verstellweg des Schraubringes 7 in axialer Richtung beim Verpressen des Dichtringes 4 entspricht. Wird der Schraubring 7 soweit verschraubt, daß er durch die dadurch erfolgende axiale Verstellung mit dem Bund 12 an der Stirnseite 8 der Aufnahmehülse 3 anliegt, ist eine weitere Verschraubung und Verpressung des Dichtringes 4 nicht mehr möglich.

Es sei erwähnt, daß bei Fig. 1 ein derartiger Anschlag zur Begrenzung des Verstellweges der Schraubhülse 7 gar nicht vorgesehen ist, so daß diese Bewegung allenfalls durch den Widerstand der dabei zusammen zu pressenden Materialien begrenzt wird.

In anderen Ausführungsbeispielen, zum Beispiel gemäß Fig. 4 und 8 oder auch 15, 16, 18 und 19 ist der Anschlag zum Begrenzen der axialen Verstellbarkeit des Schraubringes 7 beim Verpressen des Dichtringes 4 im inneren der Aufnahmehülse 3, beispielsweise in axialer Richtung hinter dem Gewinde 13 zwischen Schraubring 7 und Aufnahmehülse 3, vorgesehen. In diesem Falle ist der Anschlag mit 14 bezeichnet.

In den Ausführungsbeispielen gemäß Fig. 1 bis 8 und 15 bis 29 hat die Aufnahmehülse 3 ein Innengewinde für einen in ihr Inneres einschraubbaren Schraubring 7, der demgemäß ein Außengewinde hat, während in den Ausführungsbeispielen gemäß Fig. 9 bis 14 dargestellt ist, daß dies auch umgekehrt möglich ist, d.h. die Aufnahmehülse 3 kann ein Außengewinde für einen außen aufschraubbaren Schraubring 7 haben. Daraus ergeben sich jeweils etwas verschiedene Gestaltungen dieser Teile, die in den Ausführungsbeispielen deutlich erkennbar sind. Es sei jedoch erwähnt, daß in vielen Fällen auch jeweils umgekehrte Anordnungen der Gewinde vorgesehen sein könnten.

Bei manchen Ausführungsbeispielen ist das Lösen der gesamten Steckverbindung 1 und dabei vor allem des Rohres 2 nur durch Losschrauben des Schraubringes 7 möglich. Dies gilt beispielsweise bei Fig. 1 und 2, bei den Fig. 9 bis 14 und 23 und 24. Bei den übrigen Ausführungsbeispielen erkennt man, daß zum Lösen der Steckverbindung eine in das Innere der Aufnahmehülse 3 eingreifende Schiebehülse 15 vorgesehen sein kann, mit deren innerer Stirnseite 16 oder einem inneren Anschlag, die Haltevorrichtung, im dargestellten Fall eine Haltescheibe 5 und dabei vor allem ihr nach innen ragender geschlitzer Bereich von der Rohroberfläche wegbiegbar ist, wenn diese Schiebehülse 15 in axialer Richtung nach innen gedrückt wird. In dieser nach innen gedrückten Position, in welcher also der Haltebereich der Halteeinrichtung 5 durch Verformung von der Rohroberfläche wegbewegt ist, kann das Rohr 2 zurückgezogen werden. Wird die Schiebehülse 15 losgelassen, wird sie aufgrund der federnden Rückstellkraft der aus einem entsprechenden federnden Werkstoff bestehenden Halteeinrichtung 5 wieder zurückbewegt und die nimmt wieder ihre Gebrauchsstellung ein.

Während bei dem Ausführungsbeispiel nach Fig. 1 überhaupt kein die axiale Verstellung des Schraubringes 7 begrenzender Anschlag vorgesehen ist und bei mehreren Ausführungsbeispielen, beispielsweise gemäß Fig. 2 bis 4 lediglich ein fester Anschlag einen vorgegebenen Verstellweg des Schraubringes 7 begrenzt, ist bei weiteren Ausführungsbeispielen, insbesondere denen gemäß Fig. 5 und 6,9,10,14,18,21 und 22 sowie weiteren Ausführungsbeispielen vorgesehen, daß der Schraubring 7 und die Aufnahmehülse 3 einen im ganzen mit 17 bezeichneten überwindbaren Anschlag miteinander haben, an welchem der Schraubring 7 bei funktionsgerechter Steckverbindung 1 in Gebrauchsstellung, wie sie in den Zeichnungen dargestellt ist, vor dem zusätzlichen Verpressen des Dichtringes 4 ansteht.

Dieser überwindbare Anschlag 17 ist dabei als Stirnseite eines ringförmigen Klemmsitzes ausgebildet, welcher durch zwei in verpreßter Position des Dichtringes 7 sich berührender Ringbereiche 18 und 19 an der Aufnahmehülse 3 und dem Schraubring 7 gebildet ist. In den genannten Ausführungsbeispielen mit einem solchen überwindbaren Anschlag 17 erkennt man, daß diese Ringbereiche 18 und 19 einander jeweils in axialer Richtung noch benachbart sind. Der überwindbare Anschlag 17 beziehungsweise der Ringbereich 18 an der Aufnahmehülse 3 hat dabei beispielsweise ein radiales geringes Übermaß gegenüber der dazu passenden Gegenfläche an dem Ringbereich 19 des Schraubringes 7, so daß aus der dargestellten Position der Schraubring nur mit erhöhter Kraft der Schraubbewegung in axialer Richtung weiterverstellt werden kann, um den Dichtring zu verpressen. Dadurch kann die verpreßte Position gleichzeitig reibschlüssig fixiert werden, was vor allem bei dynamisch beaufschlagten Steckverbindungen 1 von Vorteil ist, bei denen Rüttelbewegungen auftreten könnten. Diese können dann nicht zur Lockerung des Schraubringes 7 und somit wieder zur Verminderung der Dichtwirkung führen. Außerdem kann auf diese Weise die gesamte Steckverbindung 1 montagemäßig so vorbereitet werden, daß die Gebrauchsstellung trotz der axialen Verschraubbarkeit des Schraubringes 7 aus der normalen Gebrauchsstellung festgelegt ist und der Benutzer eine sofort voll funktionsfähige Steckverbindung 1 erhält, die er aber bezüglich der Dichtwirkung durch weiteres Verschrauben des Schraubringes 7 gegen den Widerstand des überwindbaren Anschlages 17 weiter verstellen kann.

Aus den aufgezählten Ausführungsbeispielen und deren Vergleich kann man erkennen, daß dieser überwindbare Anschlag 17 an verschiedenen Stellen vorgesehen sein kann, an denen sich der Schraubring 7 und die Aufnahmehülse 3 in irgendeiner Weise berühren können oder Fortsetzungen oder Verlängerungen für eine gegenseitige Berührung haben können.

In der Mehrzahl der Fälle ist vorgesehen, daß der als überwindbare Anschlag 17 ausgebildete Klemmsitz der beiden Ringbereiche 18 und 19 im Inneren der Aufnahmehülse 3, beispielsweise an dem Sitz des Druck- oder Zwischenringes 6 zwischen der Halteeinrichtung 5 und dem Dichtring 4, das heißt an der den Druck- oder Zwischenring 6 umgreifenden Mantelfläche der Aufnahmehülse 3, angeordnet und durch die axiale Verschiebung dieser Ringe und Scheiben beim Verpressen des Dichtringes 4 für die Beaufschlagung für die Beaufschlagung durch den dazu passenden Ringsitz an der Schraubhülse 7 freilegbar ist. Mit anderen Worten wird durch die weitere Verschraubung der Schraubhülse 7 und die dabei erfolgende Übereinanderschiebung der Ringbereiche 18 und 19 zur Herstellung des Klemmsitzes eine axiale Verschiebung innerhalb der Aufnahmehülse 3 bewirkt, wodurch vor allem die axiale Ausdehnung des Dichtringes 4 vermindert wird. Die dazu erforderlichen Verschiebungen können den entsprechenden Ringbereich 18 der Aufnahmehülse 3 freilegen, so daß die Verschiebebewegung gleichzeitig zur Bildung des Klemmsitzes und zur Verpressung des Dichtringes 4 führt.

Die Anordnung des Klemmsitzes kann an unterschiedlichen Stellen vorgesehen sein. Bei den Ausführungsbeispielen zum Beispiel gemäß Fig. 6 bis 8, 9 bis 11, 15 bis 19, 20 und 21 ist eine innere - oder äußere (vgl. Fig. 9 bis 11) - Ringfläche 18 mit radialem Übermaß der in Einsteckrichtung vorderen Stirnseite 8 unmittelbar benachbart an der Innenseite - oder Außenseite - der Aufnahmehülse 3 vorgesehen und die Schraubhülse 7 hat jeweils die dazu passende Gegenfläche als Ringbereich 19 in Einsteckrichtung hinter dem Gewinde 13. Vor allem bei Anordnung der Ringfläche 18 benachbart zur Stirnseite 8 an der Innenseite der Aufnahmehülse läßt sich diese durch entsprechende Bearbeitung problemlos anbringen.

Bei den schon erwähnten Ausführungsbeispielen gemäß Fig. 9 bis 14 hat der Schraubring 7 ein Innengewinde und ist auf ein Außengewinde an der Außenseite der Aufnahmehülse 3 aufschraubbar. In diesem Falle sind der oder die Anschläge 17 - wie vorstehend schon angedeutet - an der Innenseite des Schraubringes 7 vorgesehen und wirken mit einem außenseitigen Anschlag der Aufnahmehülse 3, zusammen d.h. bei Verwendung eines überwindbaren Anschlages 17 befindet sich der Ringbereich 19 des Schraubringes 7 für den Klemmsitz an einem innenseitigen Bereich des Schraubringes 7, während der Ringbereich 18 der Aufnahmehülse 3 an dieser außenseitig zum Beispiel benachbart zur Stirnseite 8, aber auch von dieser in axialer Richtung abliegend angeordnet ist. In Fig. 12 und 13 erkennt man Lösungen, bei denen der Ringbereich 18 für den Klemmsitz an der Aufnahmehülse 3 außenseitig, jedoch gegenüber der Stirnseite 8 zurückliegend angeordnet ist und sich der entsprechend innenliegende Ringbereich 19 des Schraubringes 7 benachbart zu dessen in Schraubrichtung vorderen Stirnseite befindet.

In Fig.10 ist noch eine Besonderheit erkennbar, bei welcher nämlich die Stirnseite 8 einen ringförmig umlaufenden, stirnseitig offenen Einschnitt 20 hat und der den Klemmsitz bildende Ringbereich 19 des Schraubringes 7 schräg konisch verläuft, so daß beim axialen Verschrauben der Einschnitt 20 etwas zusammengedrückt wird und so ein überwindbarer Anschlag 17 entsteht, der vor allem auch auf den Verformungskräften im Bereich des Einschnittes beruht.

In all' diesen Fällen wird also erreicht, daß eine Ausgangslage mit einem Dichtring 4 vorliegt, die zu einer dichten Steckverbindung 1 führt, wenn eine Schnellverbindung mit einem Rohr 2 durchgeführt wird, die aber gegen einen erhöhten Widerstand eine axiale Verschraubung des Schraubringes 7 und damit eine Verpressung des Dichtringes 4 erlaubt, so daß die Dichtwirkung verbessert bzw. die Zeitdauer vergrößert werden kann, für welche die Dichtwirkung erhalten bleibt, was vor allem bei einer Montage der Steckverbindung an unzugänglicher Stelle, z.B. unter Putz, vorteilhaft ist.

In einigen Ausführungsbeispielen, beispielsweise gemäß Fig. 7, 8, 9, 11, 12, 13, 15 bis 17 und 20 sind zwei überwindbare Anschläge 17 und 21 unterschiedlicher radialer Abmessungen in axialer Richtung der Art hintereinanderliegend angeordnet, daß beim Verschrauben des Schraubringes 7 gegenüber der Aufnahmehülse 3 zuerst der überwindbare Anschlag 21 mit dem geringeren radialen Übermaß und danach - beim Verpressen des Dichtringes 4 oder der Dichtringe - der überwindbare Anschlag 17 mit dem größeren radialen Übermaß und dem stärkeren Klemmsitz an den Ringbereichen 18 und 19 wirksam sind. In den vorerwähnten dargestellten Ausführungsbeispielen ist dabei der leichter überwindbare Anschlag 21 bereits überwunden, das heißt der Schraubring 7 befindet sich bereits in einer Position, in der er schwergängiger gegenüber dem allerersten Einschrauben auch wieder aus der Aufnahmehülse 3 herausgeschraubt werden könnte. Diese Position entspricht dabei der normalen Gebrauchsstellung, in der eine Schnellverbindung bereits zu einer üblichen Abdichtung zwischen Rohr 2 und Dichtring 4 führt. Da diese Position nur eine schwergängige Lösebewegung des Schraubringes 4 wieder zurück über den überwindbaren Anschlag 21 erlauben würde, erhält der Benutzer eine reibschlüssig fixierte erste Gebrauchsstellung, bei der er also schon von einer genügenden Dichtigkeit ausgehen kann. Dadurch wird die Bedienbarkeit erleichtert, denn der Schraubring 7 erhält auf diese Weise eine definierte Montagestellung, aus welcher heraus dann der Benutzer den oder die Dichtringe 4 durch Überwinden des weiteren überwindbaren Anschlages 17 stärker verpressen kann.

Bei den vorerwähnten Ausführungsbeispielen gemäß Fig.7 bis 9 usw. ist also der Schraubring 7 in Ausgangsstellung zum schnellen Verbinden mit einem Rohr 2 durch dessen Einstecken in die Aufnahmehülse 3 so weit verschraubt, daß er mit dem ersten überwindbaren Anschlag 21 in Wirkverbindung ist. Diese Position liegt dabei genügend fest, so daß sie auch beim Transport nicht ungewollt gelöst wird, also der Benutzer davon ausgehen kann, daß er sofort eine Schnellverbindung durchführen kann. Der Verstellweg zum Verpressen des oder der Dichtringe 4 entspricht der Breite des zweiten, schwerer überwindbaren Anschlages 17, der somit die Funktion erfüllt, die auch der einzige überwindbare Anschlag 17 der zuvor beschriebenen Ausführungsbeispiele etwa gemäß Fig.5 oder 6, 14 oder 21 hat.

Es sei an dieser Stelle erwähnt, daß in allen Ausführungsbeispielen als Dichtringe 4 O-Ringe vorgesehen sind, aber auch andere, vorzugsweise einen balligen oder konvexen Querschnitt aufweisende Dichtringe 4 oder solche mit Dichtlippen Verwendung finden können.

Einige Ausführungsbeispiele zeigen Möglichkeiten, die axiale Verpressung der Dichtung durchzuführen, ohne dabei die Haltevorrichtung in Form einer Haltescheibe 5, mit in axialer Richtung verschieben zu müssen, was insbesondere bei Kunststoffrohren zu einer gewissen Beschädigung der Rohraußenseite führen könnte. Zwar ist eine solche außenseitige Beschädigung der Rohroberfläche unschädlich, weil die Abstände zwischen Haltescheibe 5 und Dichtring 4 genügend groß sind, um solche von der Haltescheibe erzeugten Riefen oder dergleichen nicht bis in die Dichtzone gelangen zu lassen - zumindest können die Abstände entsprechend groß gewählt werden - jedoch kann es Fälle geben, in denen eine solche Beeinträchtigung oder Beaufschlagung der Rohraußenseite vermieden werden soll. Diesbzgl. Möglichkeiten sind in den Figuren 3 und 4 sowie 21, 22, 27 und 29 dargestellt.

Gemäß Fig.3, 7, 22, 27 und 29 hat zu dem vorerwähnten Zweck, eine axiale Relativbewegung des Schraubringes 7 gegenüber der nicht mitbewegten Haltescheibe 5 zu ermöglichen, der Schraubring einen Fortsatz 22, der entsprechend der Ringform des Dichtringes 4 stutzen- oder hülsenartig ausgebildet ist und an dem Druckring 6 in axialer Richtung anschlägt, der seinerseits in axialer Richtung an dem Dichtring 4 anliegt und durch Verschrauben des Schraubringes 7 in axialer Richtung verstellbar ist. Dabei hat dieser Fortsatz 22, der einstückig mit dem Schraubring 7 verbunden ist, gegebenenfalls aber auch eine Zwischenhülse sein könnte, einen Innendurchmesser, der etwa gleich oder aber größer als der Außendurchmesser der Haltescheibe 5 ist und relativ zu dieser als Fächerscheibe ausgebildeten Haltescheibe 5 bis zu einem axialen Anschlag 23 an der Haltescheibe 5 verstellbar ist. Selbst wenn die Verstellbewegung nicht ganz bis zum Anschlag 23 erfolgt, ist eine genügende Festlegung erfolgt, bei der das Rohr 2 zwar in axialer Richtung noch eine gewisse Beweglichkeit gegenüber der Steckverbindung 1 hat, weil es zusammen mit der Haltescheibe 5 axial bis zu dem Anschlag 23 an dem Schraubring 7 zurückgezogen werden könnte, jedoch kann dies sogar günstig sein, um Wärmebewegungen oder sonstige Anpassungen auffangen zu können.

Der Schraubring 7 hat also - im Bereich seines Fortsatzes 22 - eine die Haltescheibe 5 an deren Außenrand umfassende, in sich aufnehmende, die schon erwähnte Relativbewegung gegenüber der Haltescheibe 5 zulassende Aussparung, deren in Einsteckrichtung hintere Begrenzung der Anschlag 23 für die Haltescheibe 5 ist. Die axiale Länge des Fortsatzes 22 bzw. der darin befindlichen Aussparung kann dabei auf den axialen Verstellweg des Schraubringes 7 beim Verpressen des oder der Dichtringe 4 abgestimmt sein.

Eine abgewandelte Anordnung, die ebenfalls die axiale Verstellung des Schraubringes 7 ohne Mitnahme der Haltescheibe 5 ermöglicht, sieht gemäß Fig.4 oder 21 vor, daß der zwischen Haltescheibe 5 und Dichtring 4 befindliche Druckring 6 einen entgegen der Einsteckrichtung vorstehenden ring- oder hülsenförmigen Vorsprung 24 hat, dessen Innenseite die Haltescheibe 5 in sich aufnimmt und dessen Stirnseite an dem Schraubring 7 beim Verpressen der Dichtung anschlägt. Man erkennt in den genannten Figuren deutlich, daß dadurch der Schraubring 7 und der Druckring 6 axial in Einsteckrichtung bewegt werden können, um den Dichtring 4 zu verpressen, ohne daß die Haltescheibe 5 mitbewegt werden muß.

In beiden eine solche Relativbewegung der Haltescheibe 5 ermöglichenden Ausführungsformen hat die die Haltescheibe 5 aufnehmende Aussparung - außer in Fig.7 - entweder an dem Schraubring 7 oder an dem Druckring 6 an ihrem freien Rand eine Umbördelung 25 zum Begrenzen dieser Aussparung, so daß also die Haltescheibe 5 in Gebrauchsstellung innerhalb der genannten Aussparung axial festgelegt ist.

Während bei der Mehrzahl der dargestellten Ausführungsbeispiele der Schraubring 7 im Inneren der Aufnahmehülse 3 angeordnet ist, sind die Figuren 9 bis 14 Beispiele für eine Lösung, bei welcher der Schraubring 7 an der Außenseite der Aufnahmehülse 3 in der Art einer Überwurfmutter angreift und der Dichtring 4 in Einsteckrichtung im vorderen Bereich der Aufnahmehülse 3 vor der Halteeinrichtung 5 angeordnet ist. Die Halteeinrichtung 5 liegt dabei an einem festen Anschlag in der Aufnahmehülse 3 direkt oder indirekt an. Dies führt dazu, daß beim Verpressen der Dichtung die Haltevorrichtung 5 ebenfalls nicht in axialer Richtung bewegt wird. Allerdings sind Übertragungselemente vorhanden, die die axiale Verstellung des Schraubringes von der Außen- auf die Innenseite der Aufnahmehülse übertragen, sei es in Form eines weiteren vorderen Druckringes 26 (Fig.9), sei es in Form eines einwärts gerichteten Vorsprunges 27 an dem Schraubring (Fig.10), sei es in Form einer axialen Verbreiterung des zwischen Halteeinrichtung 5 und Dichtring 4 angeordneten Druckringes 6 (Fig.11 bis 14), wobei die axiale Erstreckung dieses verbreiterten Druckringes 6 bis über die vordere Stirnseite 8 der Aufnahmehülse 3 reicht und von dem Überwurfmutter-artigen Schraubring stirnseitig - unter Zwischenlage der Halteeinrichtung 5 - übergriffen ist.

Eine besondere Ausgestaltung der Erfindung und dabei der Trennung von Dichtring 4 und Halteeinrichtung 5 ist in den Anordnungen der Steckverbindung 1 gemäß Fig.15 bis 19 dargestellt. In diesen Ausführungsbeispielen ist mit dem Gewinde 13 der Aufnahmehülse 3 eine Schraubhülse 28 verschraubbar, die den oder die Dichtringe 4 in axialer Richtung beaufschlagt und zu deren Verpressung dient. In dieser Schraubhülse 28 ist der Schraubring 7 angeordnet, mit welchem die Halteeinrichtung 5 in axialer Richtung an der Innenseite der Schraubhülse 28 fixiert ist. In konventioneller Weise kann also mit dem Schraubring 7 die Halteeinrichtung 5 festgelegt werden, allerdings innerhalb einer Schraubhülse 28, die dann ihrerseits durch eine Einschraubbewegung in axialer Richtung verstellbar ist und den oder die von ihr direkt oder indirekt beaufschlagten Dichtringe 4 verpressen kann. Dabei können selbstverständlich in üblicher Weise wiederum wenigstens ein oder zwei in axialer Richtung hintereinander liegende überwindbare Anschläge 17 und 21 vorgesehen sein, wie es vorstehend schon beschrieben wurde.

Es sei an dieser Stelle erwähnt, daß es auch möglich ist, mit dem Gewinde der Aufnahmehülse 3 eine Schraubhülse 28 zu verschrauben, die eine Halteeinrichtung 5 in axialer Richtung an einem Innenanschlag der Aufnahmehülse 3 fixiert, und daß in dieser Schraubhülse 28 der Schraubring 7 angeordnet ist und den oder die Dichtringe 4 gegen einen Innenanschlag der Schraubhülse 28 andrückt und zum Verpressen des in axialer Richtung vor der Haltevorrichtung 5 befindlichen Dichtringes 4 dient. In einem solchen Falle wären also praktisch Dichtring 4 und Haltevorrichtung 5 gegenüber der in den Figuren 15 bis 19 dargestellten Anordnung vertauscht. Im übrigen zeigt Fig.17 einen solchen mit Hilfe des Schraubringes 7 verpreßbaren Dichtring 4, während außerdem ein weiterer Dichtring 4 mit Hilfe der Schraubhülse 28 verpreßt werden kann. Daraus wird auch deutlich, daß die Anordnung des oder der Dichtringe 4 zwischen Schraubhülse 28 und innerem Anschlag der Aufnahmehülse 3 die Möglichkeit bietet, größere Dichtringe zu verwenden, die also mehr Dichtrungswerkstoff zum Verpressen aufweisen.

Es wurde schon erwähnt, daß auch mehrere Dichtringe 4 in Einsteckrichtung in axialer Richtung hintereinanderliegend angeordnet sein können, so daß an dem einsteckbaren Rohr 2 zwei in axialer Richtung hintereinanderliegende Dichtzonen vorgesehen sind. Beispiele dafür sind die Ausführungsformen gemäß Fig.9 und 17 bis 29. Außer der Lösung nach Fig.17 sind bei den übrigen derartigen Ausführungsbeispielen jeweils zwei übereinstimmende Dichtringe 4 in axialer Richtung hintereinander vorgesehen und bei den Lösungen gemäß Fig.18 bis 20 sowie 29 ist zwischen den Dichtringen 4 ein Druckring 29 angeordnet. Beim Ausführungsbeispiel gemäß Fig.9 und 27 hingegen liegen die beiden Dichtringe 4 unmittelbar aneinander. Durch diese Maßnahme kann die Dichtwirkung weiter verbessert und vor allem auch der Effekt beim Verpressen entsprechend vergrößert werden, so daß sogar bei besonders hohen Anforderungen an die Dichtigkeit auch mehr als zwei Dichtringe 4 hintereinanderliegend vorgesehen werden können. Hat beispielsweise die Rohraußenseite im Endbereich des Rohres 2 unerwünschte Verformungen oder Beschädigungen, kann durch mehrere in axialer Richtung hintereinander wirksam werdende Dichtringe 4, die außerdem auch noch verpreßt werden können, die Dichtigkeit dennoch mit genügender Sicherheit und Wirksamkeit erreicht und lange Zeit aufrechterhalten werden.

Bzgl. dieser Dichtringe sei noch erwähnt, daß sie auch verschieden ausgebildet sein könnten, sei es bzgl. ihrer Querschnittsform, sei es bzgl. der Abmessungen.

Bei allen Ausführungsbeispielen, bei denen zwischen Dichtringen 4 ein Druckring 29 vorgesehen ist, erkennt man, daß dieser Druckring 29 und die Dichtringe 4 gemeinsam in derselben in axialer Richtung durchgehenden Aussparung gleichbleibenden Innenquerschnittes der Aufnahmehülse 3 axial hintereinander angeordnet sind, so daß beim Verpressen des in Einsteckrichtung vorderen Dichtringes die axiale Bewegung über diesen Druckring 29 auch auf den dahinter befindlichen Dichtring 4 übertragen, also alle Dichtringe 4 durch eine Schraubbewegung des Schraubringes 7 verpreßt werden. Lediglich bei der Ausführungsform nach Fig.17 können die beiden Dichtringe 4 jeweils unabhängig voneinander und somit eventuell auch verschieden stark verpreßt werden, weil der in Einsteckrichtung vordere Dichtring 4 mit Hilfe des Schraubringes 7, der in Einsteckrichtung hintere Dichtring 4 jedoch mit Hilfe der Schraubhülse 28 verpreßt wird, wobei die Verstellung der Schraubhülse 28 den Schraubring 7 und den davon beaufschlagten Dichtring 4 sowie den ebenfalls dort befindlichen Druckring 6 und die Haltevorrichtung 5 automatisch mitnimmt.

Das Einschieben des Rohres 2 in die Steckverbindung 1 bewirkt schon bei dem Berührkontakt mit dem in Einsteckrichtung vorderen Dichtring 4 dessen Verformung, die sich auch in axialer Richtung auswirken kann. Damit dadurch der in Einsteckrichtung tieferliegende zweite Dichtring 4 nicht zu stark vor allem radial nach innen verformt wird und das weitere Eindringen des Rohres 2 an dessen Stirnseite erschwert oder gar verhindert, sind vorteilhafte Ausgestaltungen vor allem der Anlagefläche 30 für den in Einsteckrichtung am weitesten hinten oder tiefsten in der Aufnahmehülse 3 befindlichen Dichtring 4, aber auch an dem zwischen zwei Dichtringen 4 befindlichen Druckring 29 (vgl. insbesondere auch Fig.30a bis g) in unterschiedlicher Weise möglich und vorgesehen.

In den genannten Ausführungsbeispielen mit zwei in Einsteckrichtung hintereinanderliegenden Dichtringen 4 erkennt man, daß diese Anlagefläche 30 eine Ringfläche ist, die in Einsteckrichtung gesehen mit der zylindrischen Innenwandung der Aufnahmehülse 3 zumindest einen rechten Winkel (Fig.9,26,27 und 29 sowie Fig.17 teilweise) oder einen spitzen Winkel (Fig.18 bis 25) bildet, bei welchem diese Anlagefläche 30 also von ihrem kleineren Durchmesser ausgehend in Einsteckrichtung schräg nach außen verläuft und in radialer Richtung einen Hinterschnitt bildet. Wird nun Druck beim Einschieben des Rohres 2 und Beaufschlagen des vorderen Dichtringes 4 auf diesen in Einsteckrichtung hinteren Dichtring 4 übertragen, sorgt diese Anlagefläche 30 aufgrund ihrer rechtwinkligen oder gar spitzwinkligen Anordnung dafür, daß der Dichtring 4 an dieser Anlagefläche 30 praktisch keiner radial nach innen gerichteten Kraftkomponente ausgesetzt wird, wie es bei Anordnungen mit einer umgekehrt schräg verlaufenden Anlagefläche 30 (für nur einen Dichtring) beispielsweise gemäß Fig.12 bis 14 oder Fig.4 teilweise der Fall ist. Diese Maßnahme verhindert also bereits eine zu starke Verformung des in Einsteckrichtung hinteren Dichtringes 4 an seiner radialen Innenseite, so daß die Gefahr einer Kollision mit der Stirnseite des einzuschiebenden Rohres 2 bereits vermindert oder sogar ausgeschlossen ist.

Auch der zwischen den beiden Dichtringen 4 befindliche Druckring 29 kann so gestaltet werden, daß eine gezielte Verformung der Dichtringe stattfindet, bzw. der in Einsteckrichtung hintenliegende Dichtring 4 nicht schon vorzeitig beim Einschieben des Rohres 2 und dabei auftretenden axialen Reaktionskräften zu sehr nach innen verformt wird. Zu diesem Zweck ist bei den Ausführungsbeispielen gemäß Fig.18 und 20 bis 24 sowie Fig.30 b,e,f und g als Druckring 29 zwischen zwei Dichtringen 4 ein Zwischenring vorgesehen, dessen Anschlagfläche 31 an dem in Einsteckrichtung hinteren Dichtring 4 in radialer Richtung von innen nach außen entgegen der Einsteckrichtung zumindest teilweise (Fig.18 und 30f) oder insgesamt schräg verläuft, so daß seine Anschlagfläche 31 im radial äußeren Bereich der Einstecköffnung bzw. der Stirnseite 8 der Aufnahmehülse 3 näher als im radial inneren Bereich angeordnet ist, also für den in Einsteckrichtung hinteren Dichtring 4 einen sich in radialer Richtung axial erweiternden Hinterstich bildet.

Es ergibt sich so bei einem durch das Einschieben des Rohres bewirkten axialen Druck auf die in Einsteckrichtung hintere Dichtung durch diese Anschlagfläche 31 dieser Dichtring 4 eher eine Verformungskomponente radial nach außen als nach innen, so daß vor allem bei Kombination dieser mit der schon vorerwähnten entgegengesetzten Schrägung der Anlagefläche 30 die Gefahr einer Behinderung des Einschiebens des Rohres 2 im Bereich des zweiten Dichtringes 4 ausgeschlossen erscheint. Diese Kombination von Schrägflächen ist deutlich in den Figuren 20 bis 25 erkennbar, wobei nämlich die den in Einsteckrichtung hinteren Dichtring 4 in axialer Richtung abstützende Anlagefläche 30 und die an dem Druckring 29 befindliche, diesen Dichtring 4 axial beaufschlagende Anschlagfläche 31 jeweils in radialer Richtung zumindest teilweise nach außen schräg voneinander zurückweichen und der Querschnitt des den in Einsteckrichtung hinteren Dichtringes 4 haltenden Ringraumes zumindest teilweise trapezförmig ist bzw. in radialer Richtung eine axiale Erweiterung nach außen hat.

Zusätzlich zu den vorerwähnten Maßnahmen können weitere Formgebungen an dem Druckring 29 und auch an dem Druckring 6 vorgesehen sein. So kann die den in Einsteckrichtung vorderen Dichtring 4 beaufschlagende Anlagefläche 32 des Druck- oder Zwischenringes 29, gegen welchen der vordere Dichtring 4 beim Verpressen anliegt, und der in Einsteckrichtung vor dem vorderen Dichtring 4 liegende weitere Druckring 6 in rechtwinklig zur Einsteckrichtung angeordneten Ebenen liegen oder - nach beliebigen Richtungen - schräg verlaufen, je nachdem, wie die radiale Verformung des vorderen Dichtringes 4 beim Einschieben des Rohres 2 oder auch beim Verpressen gesteuert werden soll.

Denkbar wäre es, daß die Anschlagfläche 33 des in Einsteckrichtung vorderen Druckringes 6 für den in Einsteckrichtung vorderen Dichtring 4 von der Innenseite radial nach außen rechtwinklig (z.B. Fig.28b) oder in dem Sinne schräg verläuft, daß sich der Aufnahmeraum für den vorderen Dichtring 4 in radialer Richtung nach außen axial erweitert (z.B. Fig.20). Dies würde diesem vorderen Dichtring bei einer axialen Beaufschlagung vor allem auch eine Verformungskomponente radial nach außen verleihen.

Zweckmäßiger ist es jedoch, daß der Querschnitt des Zwischenraumes zwischen dem ersten und dem zweiten Druckring 4 etwa trapezförmig ist, wobei sich dieser Zwischenraum, der durch den Druckring 29 gebildet wird, in radialer Richtung von innen nach außen verengt (z.B. Fig.21). Somit hat der zwischen zwei Dichtringen 4 befindliche Druckring 29 zumindest teilweise einen trapezförmigen Querschnitt, der sich radial von innen nach außen verjüngt, wie es beispielsweise in den Figuren 18,20 und 24 dargestellt ist. Er könnte sich jedoch auch gemäß Fig.19 und 30c von außen nach innen zumindest teilweise verjüngen.

Fig.20 ist ein Beispiel dafür, daß die Anschlagfläche 33 und die Anlagefläche 32 für den in Einsteckrichtung vorderen Dichtring 4 zwischen dem vorderen Druckring 6 und dem Zwischen- oder Druckring 29 etwa parallel zueinander schräg von innen in Einsteckrichtung nach außen verlaufen können.

Im übrigen sind neben den in den angesprochenen Ausführungsbeispielen dargestellten Druckringen 6 und 29 weitere in ihrem jeweiligen Querschnitt unterschiedlich gestaltete Druckringe 6 in Fig.28 und Zwischen- oder Druckringe 29 in Fig.30 dargestellt. Dabei erkennt man jeweils unterschiedliche Neigungen der Anschlag- und Anlageflächen, womit die beim Einführen eines Rohres 2 und/oder beim Verpressen der Dichtringe 4 auftretenden radialen Kraftkomponenten an den jeweiligen Dichtringen 4 unterschiedlich und je nach Bedarf beeinflußt werden können.

Abschließend sei noch erwähnt, daß die Aufnahmehülse 3 in allen Ausführungsbeispielen ihrerseits ein Anschlußgewinde 34 an einem Gewindestutzen 35 aufweist, womit sie an einem entsprechenden Gegengewinde befestigt und mit Hilfe eines weiteren Dichtringes 36 abgedichtet werden kann. Sie kann aber auch Bestandteil einer Rohr- oder Schraubverbindung (beidseitig Aufnahmehülse) eines Winkelstückes mit ein- oder beidseitiger Aufnahmehülse oder eines T- oder Y-Stückes mit bis zu drei Aufnahmehülsen oder Bestandteil eines beliebigen anderen Anschlußstückes sein.

Es sei noch erwähnt, daß die vorstehend beschriebene Steckverbindung 1, wie auch schon erwähnt, in unterschiedlichen Formen insbesondere auch bzgl. der Aufnahmehülse Anwendung finden kann, indem diese Aufnahmehülse 3 selbst unterschiedlich gestaltet sein kann oder als festes Teil bereits installiert sein könnte. Die erfindungsgemäße Steckverbindung kann also auch ohne die Aufnahmehülse geliefert werden, wenn diese bereits fest installiert ist. In letzterem Falle ergibt sich eine "Halbverschraubung", bei welcher dann die übrigen Teile dieser Steckverbindung beispielsweise als Set geliefert und vom Benutzer in die schon installierte Aufnahmehülse eingefügt werden können. Beispielsweise könnte eine solche Aufnahmehülse an Heizkörpern, Verteilungen oder dergleichen fest installiert werden. Der Benutzer erhält dann die Halteeinrichtung 5, den oder die Dichtringe 4, den oder die Druckringe, den Schraubring 7 und kann mit all diesen Teilen die Steckverbindung entsprechend den vorstehend beschriebenen Ausführungsbeispielen vervollständigen oder herstellen.

Es sei ferner erwähnt, daß durch den oder die verpreßbaren Dichtringe 4 die Haltekraft für das Rohr 2 in der Aufnahmehülse 3 in axialer und in Drehrichtung verstärkt wird.

Die Figuren 31 bis 39 zeigen Steckverbindungen 1, bei denen die Gebrauchs- oder Montagestellung von Aufnahmehülse 3 und übrigen Teilen nicht erreicht ist. Beispielsweise könnte in diesem Falle die Aufnahmehülse 3 ein fest installiertes Anschlußstück sein, mit welchem die übrigen Teile der Steckverbindung 1 als "Halbverschraubung" zusammenwirken, wenn sie mit dieser Aufnahmehülse 3 in der Weise verbunden werden, wie es in den vorangegangenen Ausführungsbeispielen beschrieben ist. Dabei zeigen diese Ausführungsbeispiele außerdem, daß der Dichtring 4 als Formdichtung gestaltet sein kann und dabei einen Innendurchmesser hat, der gleich oder größer als der Außendurchmesser des einzusteckenden Rohres 2 ist. Dies erkennt man daran, daß an dieser Formdichtung wenigstens ein Ringwulst 37 vorgesehen ist, dessen Innendurchmesser kleiner als der übrige Innendurchmesser der Formdichtung und zweckmäßigerweise auch kleiner als der Rohraußendurchmesser ist. Dieser Ringwulst 37 dient also dazu, bei einer komplett montierten Steckverbindung 1 die Abdichtung an der Außenseite des eingesteckten Rohres 2 in der Weise durchzuführen, wie es bei den vorangegangenen Ausführungsbeispielen gezeigt und dort durch O-Ringe verwirklicht ist. Der ringförmig umlaufende Wulst 37 stellt gewissermaßen einen Teil eines derartigen O-Ringes dar.

Dadurch wird erreicht, daß beim Einschieben eines Rohres die Reibung zwischen Dichtring 4 und Rohraußenseite nur im Bereich dieses Ringwulstes 37 auftritt.

Der Ringwulst 37 kann an dem einsteckseitigen Rand der Formdichtung innenseitig gegenüber der Formdichtung vorspringend vorgesehen sein, wie es die Ausführungsbeispiele zeigen. Er könnte aber auch am entgegengesetzten Rand vorgesehen sein, so daß das Rohr schon einen Teil dieser Formdichtung durchsetzt, bevor die Widerstandskraft dieses reibenden Bereiches zu überwinden ist. Zusätzlich könnte auch an beiden Rändern ein in den Innenquerschnitt vorspringender Wulst 37 vorgesehen sein.

Der Dichtring 4 hat in diesen Ausführungsbeispielen eine im Querschnitt gesehen konische, kegelige oder eventuell auch konvexe Außenkontur 38, an welche sich entgegen der Einsteckrichtung eine im Außendurchmesser gegenüber dieser Außenkontur 38 radial nach außen größere Schulterauflage 39 anschließt. Man erkennt in den Figuren und dabei vor allem in Fig.32, daß diese Schulterauflage 39 zum Zusammenwirken mit einer Anlagefläche nützlich ist, wobei in Fig.32 eine entsprechend gestaltete Anlagefläche 32 eines zwischenliegenden Druckringes 29 mit dieser Schulterauflage 39 zusammenwirkt.

Die konische oder kegelige, dabei eventuell noch konvexe Außenkontur 38 liegt ihrerseits an einem entsprechenden Bereich der Anlagefläche 32 an, könnte aber selbstverständlich auch an einer entsprechenden Anlagefläche 30 der Innenseite der Aufnahmehülse 3 zur Anlage kommen.

Vor allem erleichtert diese konische Außenkontur 38 das Einführen in einen als Aufnahmehülse 3 dienenden Anschlußkörper, wie er in den Figuren 31, 32, 34 und 35 dargestellt ist, wobei solche fest installierten Anschlußkörper häufig einen stirnseitigen Eintrittskonus 40 haben. Dieser kann in zweckmäßiger Weise das Zusammenfügen von Aufnahmehülse 3 bzw. Anschlußkörper 3 und den übrigen Teilen erleichtern. Vor allem kann die in Einsteckrichtung vorderste Dichtung auf diese Weise gut eingeführt werden.

Ferner kann diese konische und ballige Außenkontur 38 in Gebrauchsstellung mit dem tieferliegenden Innenkonus 41 der Aufnahmehülse 3 zusammenwirken, die man deutlich in Fig.31 erkennt. Sind die zu der Steckverbindung gehörenden Teile in die in Fig.31 dargestellte Anschlußhülse 3 eingefügt und der Schraubring 7 bis zu der ersten Verschraubungsposition verschraubt, kann dieser konische Außenteil der Außenkontur 38 an diesem Innenkonus 41 angeschmiegt sein. Je nach Maßverhältnissen kann dies aber auch erst dann zumindest vollständig der Falls ein, wenn der Schraubring 7 zusätzlich verschraubt ist und die Dichtungen verpreßt werden, wobei dann auch dieser die konische Außenkontur 38 aufweisende Teil des Dichtringes radial nach innen gegen die Rohrseite verformt werden kann.

Eine wichtige Besonderheit zeigt Fig.33b. Dort hat die Formdichtung noch einen ringartigen Fortsatz 42, durch welchen die Formdichtung in axialer Richtung verlängert wird. Somit können entsprechende Fugen oder Teile insbesondere bei der Verwendung eines überwurfmutterartigen Schraubringes 7 überbrückt und abgedichtet werden.

Nach dem Zusammenfügen der Teile gem. Fig.31 ergeben sich Verhältnisse, wie sie etwa auch in Fig.5 dargestellt sind, wobei aber nun der Dichtring 4 die erwähnte Formdichtung ist.

Damit das Einfügen dieses Dichtringes 4 oder der beiden Dichtringe 4 gem. Fig.32 in die Aufnahmehülse 3 problemlos durchführbar ist, ist der Außendurchmesser des oder der Dichtringe 4 kleiner als der Innendurchmesser des Innengewindes der Aufnahmehülse 3.

In Fig.34 und 35 sowie Fig.36 bis 39 erkennt man, daß die Schulterauflage 39 an ihrer Außenseite eine ringförmig umlaufende Durchmesservergrößerung 43 mit einem wulst- oder lippenförmigen Querschnitt hat, deren Außendurchmesser größer als der Innendurchmesser des Innengewindes der Aufnahmehülse 3 ist. Dies ist vor allem bei der Anordnung, bei welcher der Schraubring 7 als Überwurfmutter gestaltet ist und als Halbverschraubung angewendet werden soll, vorteilhaft, weil auf diese Wiese der oder die Dichtringe 4 die schon eingefügte Haltescheibe 5 und den Druckring 6 sowie eventuell auch noch einen zwischenliegenden Druckring 29 in der in Fig.34 und 35 dargestellten Position festlegen können. Auch die in diesem Falle vorhandene Schiebehülse 15 kann so schon vorbereitet fixiert sein.

Vor allem in den Figuren 36 und 37 wird deutlich, daß der als Formdichtung ausgebildete Dichtring 4 von der Schulterauflage 39 und/oder von deren Durchmesservergrößerung 43 ausgehend über eine ringförmige Planfläche 44 (Fig.36) oder Schrägfläche 45 (Fig.37 bis 39) zur Durchgangsbohrung führt, die in diesem Bereich - und/oder am entgegenggesetzten Rand des Dichtringes 4 - durch den nach innen überstehenden O-Ring-ähnlichen Ringwulst 37 in ihrem Durchlaß bereichsweise eingeengt ist. An dieser zum Beispiel in einer Durchmesserebene liegenden Planfläche 44 oder gegenüber einer Durchmesserebene geneigten Schrägfläche 45 kann ein entsprechender Teil des Druckringes 6 oder auch eines zwischenliegenden Druckringes 29 anliegen, wenn es sich um eine Anordnung mit zwei Dichtringen 4 handelt. Dabei wird vor allem in Fig.36 deutlich, daß der als Formdichtung ausgebildete Dichtring 4 wenigstens mit seinem bezüglich des Innendurchmessers verengten Bereich über die Anlage- oder Anschlagfläche 31 bzw.33 eines Druckringes 29 oder 6 aufweitbar übersteht. Man erkennt in den Figuren 36 und 37 in diesen Bereichen jeweils noch einen Abstand 46, der durch die Verformung dieses Dichtringbereiches verschlossen werden kann bzw. die entsprechende Verformung dieses Dichtringes 4 beim Einfügen des Rohres 2 und/oder stärkeren Verschrauben des Schraubringes 7 erlaubt.

Bei der Anordnung gemäß Fig.38 liegt der Druckring 6 mit seiner Anschlagfläche 33 derart an einer entsprechenden schrägen Übergangsfläche 45 des Form-Dichtringes 4 an, daß diese Berührung in der dargestellten Ausgangsstellung sowohl radial außen, als auch im mittleren Bereich als auch in dem radial inneren Bereich erfolgt. Eine entsprechend starke Verpressung des Dichtringes 4 und seines Ringwulstes 37 kann erreicht werden.

Fig. 39 zeigt einen bezüglich der Schrägfläche 45 so gestalteten Dichtring 4, wie er auch bei der Anordnung nach Fig.38 vorgesehen ist. Die Anschlagfläche 33 des Druckringes 6 ist jedoch in diesem Falle so gestaltet, daß sie nur den radial inneren Bereich dieser Schrägfläche 45 und somit des gesamten Druckringes 6 beaufschlagt, wobei dies dadurch erzielt wird, daß die Anschlagfläche 33 in diesem Falle rechtwinklig zur Achse verläuft, also in einer Radialebene liegt. Somit ergibt sich von der Berührstelle zwischen Druckring 6 und Dichtring 4 ein etwa keilförmig sich radial nach außen erweiternder Schlitz, der bei einer Verpressung unter Verformung der Dichtung geschlossen werden kann.

Zusammenfassend ergibt sich, daß der Dichtring 4 sowohl im äußeren, als auch im mittleren, als auch im inneren, aber auch im gesamten Bereich der Schrägfläche 45 von dem Druckring 6 oder 29 beaufschlagt sein kann. Dabei bewirkt vor allem eine Beaufschlagung im radial inneren Bereich, daß die Durchgangsbohrung durch den Dichtring 4 derart eingeengt wird, daß sie von dem Rohr 2 beim Einstecken zu überwinden ist.

Anhand der Figuren 31, 32, 34 und 35 sei noch eine weitere zweckmäßige Ausgestaltung erläutert, die auch bei den anderen Ausführungsbeispielen vorgesehen sein könnte und darin besteht, daß der überwindbare Anschlag 17 in dem Gewinde 13 von Schraubring 7 und Aufnahmehülse 3 vorgesehen sein kann. Der entsprechende Gewindebereich ist in den genannten Figuren deshalb mit dem Bezugszeichen 17 versehen. Dabei kann als überwindbarer Anschlag 17 an dem Schraubring 7 mit Außengewinde (Fig.31 und 32) oder an dem Schraubring 7 mit Innengewinde (Fig.34 und 35) an dem Gewindeende das Gewindeprofil zumindest teilweise, zum Beispiel am Außen-, Flanken- oder Kerndurchmesser mit Übermaß bzw. Untermaß als schwergängiger Bereich ausgebildet sein.

In normaler Gebrauchsstellung bleibt dieser als überwindbarer Anschlag 17 dienende Gewindebereich noch außer Eingriff, während der übrige Gewindebereich des Schraubringes 7 in das Gegengewinde der Aufnahmehülse 3, des Anschlußkörpers oder dergleichen eingreift. In dieser Position ist die normale Gebrauchsstellung erreicht, in welcher ein Rohr 2 eingeschoben und allein dadurch festgelegt werden kann, das heißt die Steckverbindung ihre normale Gebrauchsstellung hat. Aus dieser Position kann, wie bei den vorangegangenen Ausführungsbeispielen bereits beschrieben, der Schraubring 7 noch stärker eingeschraubt werden, um den Dichtring 4 oder die Dichtringe 4 stärker zu verpressen. Dies geschieht dann dadurch, daß der schwergängige Teil des Gewindes, also der überwindbare Anschlag 17 tiefer in das Gegengewinde eingeschraubt wird und dabei in erwünschter Weise einen größeren Widerstand hat.

Es sei ferner erwähnt, daß vor allem der als Formdichtung ausgebildete Dichtring 4 als überwindbarer Anschlag ausgebildet sein kann, wie es beispielsweise in Fig.32 oder 35 angedeutet ist. Er kann dann durch eine schräge Anschlagfläche 31 des ihn beaufschlagenden Druckringes 29 und/oder durch die Anschlagfläche 33 des Druckringes 6 in Wirkstellung übergriffen sein und in Endstellung nach dem Verpressen auf der unteren Anlage- oder Anschlagfläche aufsitzen. Diese letzte Zusammenschiebung von Dichtring 4 und Druckring 29 ist schwergängig und bildet somit den überwindbaren Anschlag 17. In Fig.32 erkennt man zwischen dem Druckring 29 und dem in Einsteckrichtung vorderen Dichtring 4 noch einen geringfügigen Abstand vor allem im Bereich der Schulterauflage 39, der den entsprechenden Verschiebeweg zumindest teilweise darstellt. In Fig.35 erkennt man vor allem auch im Bereich des Ringwulstes 37 einen solchen Abstand, der aber auch in Fig.32 bei der in Einsteckrichtung vorderen Formdichtung und in den Figuren 36 und 37 erkennbar ist. Zum Verschließen dieses Abstandes 46 ist ein zusätzlicher Widerstand zu überwinden, der als überwindbarer Anschlag 17 wirkt.

Der oder die Dichtringe 4 können selbst als überwindbarer Anschlag zur Erreichung der in den vorbeschriebenen Ausführungsbeispielen dargestellten Steckgebrauchsstellung dienen, aus welcher dann der vorbeschriebene Preßvorgang durch tieferes Einschrauben des Schraubringes 7 erfolgt, der bei beliebig geformter Dichtung die Durchgangsbohrung in der Steckgebrauchsstellung weiter einengt bzw. eine Verpressung an einem eingesteckten Rohr 2 bewirkt.

Abschließend sei bzgl. der vorbeschriebenen Ausführungsbeispiele noch erwähnt, daß zumindest ein Teil der Anlage- oder Anschlagflächen 30, 32 bzw. 31 und 33 an einem oder beiden Druckringen 29 und 6 und/oder an der Aufnahmehülse 3 - im Längsschnitt der Aufnahmehülse 3 gesehen - zumindest bereichsweise kegelig oder konvex oder konkav gekrümmt sein können und/oder daß die in Einsteckrichtung hinteren Anschlagflächen 33 und 31 dem jeweiligen Dichtring 4 nur im radial mittleren bis äußeren oder aber im radial gesamten Bereich der Außenkontur des Dichtringes angepaßt sind. Dadurch lassen sich unterschiedliche Effekte beim Verpressen der Dichtungen erzielen, je nachdem, welche Abdichtwirkung gewünscht ist und ob zum Beispiel Rohre 2 erfaßt werden können sollen, deren Außenabmessung zum Beispiel durch größere Toleranzen stärker schwanken können.

Die Steckverbindung 1 für Rohre 2, Hülsen, (insbesondere harte) Schläuche oder dergleichen Rundkörper hat mindestens eine Aufnahmehülse 3 mit einem oder mehreren Dichtringen 4, die in Gebrauchsstellung unter Druck an der Außenseite des Rohres 2 anliegen. Zur axialen Festlegung des Rohres 2 dient eine dem oder den Dichtringen 4 axial benachbarte, in den Innenquerschnitt der Aufnahmehülse 3 ragende beliebige Haltevorrichtung, z.B. eine in ihrem Innenbereich geschlitzte Haltescheibe 5, die von außen nach innen in Einsteckrichtung derart schräg orientiert ist, daß ein durch diese Haltescheibe 5 unter elastischer Verformung des Innenbereiches der Haltescheibe 5 eingestecktes Rohr 2 in axialer Richtung gegen Zurückziehen festgelegt ist. Dichtring 4 und Haltevorrichtung 5 sind einander benachbart angeordnet, wobei noch ein Druckring 6 zwischen diesen vorgesehen sein kann. Die in der Aufnahmehülse 3 zur Halterung und Abdichtung des Rohres 2 dienenden Teile werden mit einem Schraubring 7 festgelegt, so daß eine einfache Montage gegeben ist. Dieser Schraubring 7 kann nun aus der üblichen Montagestellung, in welcher durch einfaches Einstecken des Rohres 2 bereits die Dichtwirkung des Dichtringes 4 auftritt, in axialer Richtung tiefer in die Aufnahmehülse 3 eingeschraubt werden, wodurch der Dichtring 4 axial unter Druck gesetzt und so verformt wird, daß er in radialer Richtung stärker an die Rohraußenseite angepreßt wird. Dadurch wird die Dichtwirkung verbessert und auch für eine längere Lebensdauer wirksam gehalten, was vor allem bei unzugänglichen Montagen zum Beispiel unter Putz zweckmäßig ist. Ferner können auch zum Beispiel zwei Dichtringe hintereinander vorgesehen sein, um insbesondere durch die erwähnte Verpressung die Dichtwirkung weiter zu steigern.

## Patentansprüche

1. Steckverbindung (1) für Rohre (2), Schläuche oder dergleichen Rundkörper mit mindestens einer Aufnahmehülse (3) für das einzusteckende Rohrende, mit einer in den Innenquerschnitt der Aufnahmehülse (3) ragenden beliebigen Halteeinrichtung, z.B. eine am Innenrand insbesondere fächerartig ausgebildete und/oder geschlitzte Haltescheibe (5), wobei der Haltebereich dieser beliebigen Klemm-, Spann- oder sonstigen Haltevorrichtung in Gebrauchsstellung in Einsteckrichtung des Rohres (2) von innen nach außen aufweitbar ist und beim Zurückziehen des Rohres (2) sperrt, und mit einem Dichtring (4), der der Halteeinricchtung (5) axial benachbart angeordnet ist und in Gebrauchsstellung die Außenseite des eingesteckten Rohres (2) dichtend beaufschlagt, wobei zur Halterung der Halteeinrichtung (5) und des Dichtringes (4) sowie einer gegebenenfalls eines dazwischen befindlichen Druckringes (6) an oder in der Aufnahmehülse (3) eine Bördelung oder ein in axialer Richtung wirksamer Schraubring (7) vorgesehen sind, **dadurch gekennzeichnet**, daß der Schraubring (7) von der Außenseite oder der Stirnseite (8) der Aufnahmehülse (3) her aus seiner Halte- und Gebrauchsstellung in axialer Richtung tiefer als diese Gebrauchsstellung in die Aufnahmehülse (3) einschraubbar ist und daß dadurch der Dichtring (4) axial unter Druck setzbar und verformbar und in radialer Richtung stärker an die Rohraußenseite anpreßbar ist.

2. Steckverbindung nach Anspruch 1, dadurch gekennzeichnet, daß der Schraubring (7) in seiner Gebrauchsstellung ohne zusätzliche Verpressung des Dichtringes (4) über die zum Einstecken des Rohrendes dienende offene Stirnseite (8) der Aufnahmehülse (3) übersteht und in diesem überstehenden Bereich eine zum Angriff eines Werkzeuges geeignete Verformung, zum Beispiel wenigstens eine Schraubenschlüssel-Fläche, insbesondere einen Außenmehrkant oder -sechskant (9) hat.

3. Steckverbindung nach Anspruch 1 oder 2, dadurch gekennzeichnet, daß der Schraubring (7) an seinem gegenüber der Aufnahmehülse (3) überstehenden Bereich einen radial abstehenden Bund (12) hat, dessen der Aufnahmehülse (3) zugewandte Seite von der Stirnseite (8) der Aufnahmehülse (3) zumindest in Gebrauchsstellung des Dichtringes (4) ohne zusätzliche Verpressung einen Abstand hat, wobei der Bund (12) vorzugsweise die Verformung für den Angriff eines Schraubwerkzeuges aufweist.

4. Steckverbindung nach einem der Ansprüche 1 bis 3, dadurch gekennzeichnet, daß der Schraubring (7) und die Aufnahmehülse (3) einen die axiale Verstellbarkeit des Schraubringes (7) und damit der Verformung des Dichtringes (4) begrenzenden Anschlag hat.

5. Steckverbindung nach einem der Ansprüche 1 bis 4, dadurch gekennzeichnet, daß der an der Außenseite des Schraubringes (7) radial überstehende Bund (12) und die Stirnseite (8) der Aufnahmehülse (3) als gegenseitiger, begrenzender Anschlag vorgesehen sind und in Ausgangsstellung vor dem Verpressen des oder der Dichtringe (4) einen Abstand voneinander haben, der dem größten gewünschten Verstellweg des Schraubringes (4) beim Verpressen entspricht.

6. Steckverbindung nach einem der Ansprüche 1 bis 4, dadurch gekennzeichnet, daß der Anschlag (14) zum Begrenzen der axialen Verstellbarkeit des Schraubringes (7) beim Verpressen des Dichtringes (4) im Inneren der Aufnahmehülse (3), beispielsweise in axialer Richtung hinter dem Gewinde (13) zwischen Schraubring (7) und Aufnahmehülse (3), vorgesehen ist.

7. Steckverbindung nach einem der Ansprüche 1 bis 6, dadurch gekennzeichnet, daß die Aufnahmehülse (3) ein Innengewinde für einen in ihr Inneres einschraubbaren Schraubring (7) oder ein Außengewinde für einen außen aufschraubbaren Schraubring (7) aufweist.

8. Steckverbindung nach einem der Ansprüche 1 bis 7, dadurch gekennzeichnet, daß zum Lösen der Steckverbindung eine in das Innere der Aufnahmehülse (3) eingreifende Schiebehülse (15) vorgesehen ist, mit deren innerer Stirnseite oder einem inneren, vorzugsweise konischen Anschlag die Halteeinrichtung (5) von der Rohroberfläche nach außen aufweitbar ist.

9. Steckverbindung nach einem der Ansprüche 1 bis 8, dadurch gekennzeichnet, daß der Schraubring (7) und die Aufnahmehülse (3) einen überwindbaren Anschlag (17) miteinander aufweisen, an welchem der Schraubring (7) bei funktionsgerechter Steckverbindung (1) in Gebrauchsstellung vor dem zusätzlichen Verpressen des oder der Dichtringe (4) ansteht.

10. Steckverbindung nach einem der Ansprüche 1 bis 9, dadurch gekennzeichnet, daß der überwindbare Anschlag (17) als Stirnseite eines ringförmigen Klemmsitzes ausgebildet ist, welcher durch zwei in verpreßter Position des Dichtringes (7) sich berührender bzw. sich überlappende Ringbereiche (18,19) an der Aufnahmehülse (3) und dem Schraubring (7) gebildet ist.

11. Steckverbindung nach einem der Ansprüche 1 bis 10, dadurch gekennzeichnet, daß der als überwindbarer Anschlag (17) ausgebildete Klemmsitz im Inneren der Aufnahmehülse (3) beispielsweise an dem Sitz eines Druck- oder Zwischenringes (6) zwischen der Haltevorrichtung (5) und dem Dichtring (4), das heißt an der dem Druck- oder Zwischenring (6) umgebenden Mantelfläche der Aufnahmehülse (3), angeordnet und durch die axiale Verschiebung dieser Ringe beim Verpressen des Dichtringes (4) freilegbar ist.

12. Steckverbindung nach einem der Ansprüche 1 bis 11, dadurch gekennzeichnet, daß der überwindbare Anschlag (17) an der Aufnahmehülse (3) ein radiales geringes Untermaß gegenüber der dazu passenden Gegenfläche an dem Schraubring (7) hat und daß ein überwindbarer Anschlag (17) von einem Endanschlag (14) an dem Schraubring (7) und/oder an der Aufnahmehülse (3) begrenzt ist.

13. Steckverbindung nach einem der Ansprüche 1 bis 12, dadurch gekennzeichnet, daß eine Ringfläche (18) mit radialem Untermaß vor oder nach dem Gewinde an der Innenseite der Aufnahmehülse (3) vorgesehen ist und der Schraubring (7) die dazu passende Gegenfläche (19) in Einsteckrichtung vor oder hinter seinem Gewinde hat.

14. Steckverbindung nach einem der Ansprüche 1 bis 13, dadurch gekennzeichnet, daß der überwindbare Anschlag (17) in dem Gewinde (13) von Schraubring (7) und Aufnahmehülse (3) vorgesehen ist.

15. Steckverbindung nach Anspruch 14, dadurch gekennzeichnet, daß als überwindbarer Anschlag (17) an dem Schraubring (7) mit Außengewinde oder an dem Schraubring (7) mit Innengewinde an dem Gewindeende das Gewindeprofil zumindest teilweise, zum Beispiel am Außen-, Flanken- und/oder Kerndurchmesser mit Übermaß bzw. Untermaß als schwergängiger Bereich ausgeführt ist.

16. Steckverbindung nach einem der Ansprüche 1 bis 15, dadurch gekennzeichnet, daß der Schraubring (7) ein Innengewinde hat und auf ein Außengewinde an der Außenseite der Aufnahmehülse (3) aufschraubbar ist und daß der/die überwindbaren Anschläge (17) an der Innenseite des Schraubringes (7) vorgesehen sind und mit einem außenseitigen Anschlag (14) oder über den an dem Schraubring (7) stirnseitig anstehenden Druckring (6) mit einem innenseitigen Anschlag (14) der Aufnahmehülse (3) zusammenwirken.

17. Steckverbindung nach einem der Ansprüche 1 bis 16, dadurch gekennzeichnet, daß wenigstens zwei überwindbare Anschläge (21;17) unterschiedlicher radialer Abmessung in axialer Richtung derart hintereinanderliegend angeordnet sind, daß beim Verschrauben des Schraubringes (7) gegenüber der Aufnahmehülse (3) zuerst der überwindbare Anschlag (21) mit dem geringeren radialen Übermaß und danach insbesondere beim Verpressen des oder der Dichtringe (4) der überwindbare Anschlag (17) mit dem größeren radialen Übermaß und dem stärkeren Klemmsitz wirksam sind.

18. Steckverbindung nach einem der Ansprüche 1 bis 17, dadurch gekennzeichnet, daß der Schraubring (7) in Ausgangsstellung zum schnellen Verbinden mit einem Rohr (2) durch dessen Einstecken in die Aufnahmehülse (3) soweit verschraubt ist, daß er mit dem ersten überwindbaren Anschlag (21) in Wirkverbindung ist, und daß der Verstellweg zum Verpressen des oder der Dichtringe (4) aus dieser Position der Breite des zweiten, schwerer überwindbaren Anschlages (17) etwa entspricht.

19. Steckverbindung nach einem der vorstehenden Ansprüche, dadurch gekennzeichnet, daß als Dichtring (4) ein oder mehrere O-Ringe, Profilringe oder Dichtringe mit Dichtlippen vorgesehen sind und daß die überwindbaren Anschläge durch einen Endanschlag (14) am Schraubring (7), der Schraubhülse (28) oder an der Aufnahmehülse (3) begrenzt sind.

20. Steckverbindung nach einem der Ansprüche 1 bis 19, dadurch gekennzeichnet, daß der Schraubring (7) mit einem Fortsatz (22) oder dergleichen an dem Druckring (6) in axialer Richtung anschlägt, der seinerseits in axialer Richtung an dem Dichtring (4) anliegt und durch Verschrauben des Schraubringes (7) in axialer Richtung verstellbar ist, und daß der Fortsatz (22) des Schraubringes (7) einen Innendurchmesser hat, der etwa gleich oder größer als der Außendurchmesser der Haltevorrichtung (5) ist, diese in sich aufnimmt und relativ zu dieser Haltevorrichtung (5) vorzugsweise bis zu einem axialen Anschlag (23) an der Haltevorrichtung (5) verstellbar ist.

21. Steckverbindung nach einem der Ansprüche 1 bis 20, dadurch gekennzeichnet, daß der Schraubring (7) eine die Haltevorrichtung (5) in sich aufnehmende, eine Relativbewegung gegenüber der Haltevorrichtung (5) zulassende Aussparung hat, deren in Einsteckrichtung hintere Begrenzung der Anschlag (23) für die Haltevorrichtung (5) ist.

22. Steckverbindung nach einem der Ansprüche 1 bis 21, dadurch gekennzeichnet, daß der zwischen Haltevorrichtung (5) und Dichtring (4) befindliche Druckring (6) einen insbesondere entgegen der Einsteckrichtung vorstehenden ringförmigen Vorsprung (24) hat, dessen Innenseite die Haltevorrichtung (5) in sich aufnimmt und dessen Stirnseite an dem Schraubring (7) beim Verpressen der Dichtung anschlägt, wobei die axiale Erstreckung des ringförmigen Vorsprunges (24) größer als die axiale Dicke der Haltevorrichtung (5) ist.

23. Steckverbindung nach einem der Ansprüche 18 bis 22, dadurch gekennzeichnet, daß die die Halteeinrichtung (5) aufnehmende Aussparung an dem Schraubring (7) oder an dem Druckring (6) an ihrem freien Rand eine Umbördelung (25) zum Begrenzen der Aussparung hat.

24. Steckverbindung nach einem der Ansprüche 1 bis 23, dadurch gekennzeichnet, daß der Schraubring (7) an der Außenseite der Aufnahmehülse (3) in der Art einer Überwurfmutter angreift und der Dichtring (4) im vorderen Bereich der Aufnahmehülse (3) vor der Haltevorrichtung (5) angeordnet ist und daß die Haltevorrichtung (5) an einem als Anlagefläche (30) ausgebildeten festen Anschlag in der Aufnahmehülse (3) direkt oder indirekt anliegt.

25. Steckverbindung nach einem der Ansprüche 1 bis 24, dadurch gekennzeichnet, daß mit dem Gewinde der Aufnahmehülse (3) eine Schraubhülse (28) verschraubbar ist, die den Dichtring (4) in axialer Richtung beaufschlagt und zu seiner Verpressung dient, und daß in dieser Schraubhülse (28) der Schraubring (7) angeordnet ist, mit welchem die Haltevorrichtung (5) in axialer Richtung an der Innenseite der Schraubhülse (28) fixiert ist.

26. Steckverbindung nach einem der Ansprüche 1 bis 25, dadurch gekennzeichnet, daß mit dem Gewinde der Aufnahmehülse (3) eine Schraubhülse (28) verschraubbar ist, die die Haltevorrichtung (5) in axialer Richtung an einem Innenanschlag der Aufnahmehülse (3) direkt oder indirekt fixiert, und daß in dieser Schraubhülse (28) der Schraubring (7) angeordnet ist und den Dichtring (4) gegen einen Innenanschlag der Schraubhülse (28) direkt oder indirekt andrückt und zum Verpressen des in axialer Richtung vor der Halteeinrichtung (5) befindlichen Dichtringes (4) dient.

27. Steckverbindung insbesondere nach einem der vorstehenden Ansprüche, dadurch gekennzeichnet, daß wenigstens einer der Dichtringe (4) vorzugsweise der in Einsteckrichtung vordere oder tiefer in der Aufnahme befindliche Dichtring, als Formdichtung einen Innendurchmesser hat, der gleich oder größer als der Außendurchmesser des einzusteckenden Rohres (2) ist, und daß an dieser Formdichtung wenigstens ein Ringwulst (37) vorgesehen ist, dessen Innendurchmesser kleiner als der Rohraußendurchmesser ist.

28. Steckverbindung nach Anspruch 27, dadurch gekennzeichnet, daß der Ringwulst (37) an dem einsteckseitigen und/oder entgegengesetzten Rand der Formdichtung innenseitig gegenüber der Formdichtung vorspringend vorgesehen ist.

29. Steckverbindung nach Anspruch 27 oder 28, dadurch gekennzeichnet, daß der Dichtring (4) eine im Querschnitt gesehen konische, keglige oder konvexe Außenkontur (38) hat, an welche sich entgegen der Einsteckrichtung eine im Außendurchmesser gegenüber dieser Außenkontur (38) größere Schulterauflage (39) anschließt.

30. Steckverbindung nach einem der Ansprüche 1 bis 29, dadurch gekennzeichnet, daß der Außendurchmesser des Dichtringes (4) kleiner als der Innendurchmesser des Innengewindes der Aufnahmehülse (3) ist.

31. Steckverbindung nach einem der Ansprüche 1 bis 30, dadurch gekennzeichnet, daß die Schulterauflage (39) an ihrer Außenseite wenigstens eine insbesondere ringförmig umlaufende Durchmesservergrößerung (43) mit einem wulst- oder lippenförmigen Querschnitt hat, deren Außendurchmesser größer als der Innendurchmesser des Innengewindes der Aufnahmehülse (3) ist.

32. Steckverbindung nach einem der Ansprüche 1 bis 31, dadurch gekennzeichnet, daß der als Formdichtung ausgebildete Dichtring (4) von der Schulterauflage (39) und/oder von deren Durchmesservergrößerung (43) über eine ringförmige Planfläche (44) oder Schrägfläche (45) zur Durchgangsbohrung führt, die in diesem Bereich und/oder am entgegengesetzten Rand des Dichtringes (4) durch den nach innen überstehenden O-Ring-ähnlichen Ringwulst (37) in ihrem Durchlaß bereichsweise eingeengt ist.

33. Steckverbindung nach einem der Ansprüche 1 bis 32, dadurch gekennzeichnet, daß der als Formdichtung ausgebildete Dichtring (4) wenigstens mit seinem bezüglich des Innendurchmesser verengten Bereich über die Anlage- oder Anschlagflächen aufweitbar übersteht.

34. Steckverbindung nach einem der Ansprüche 1 bis 33, dadurch gekennzeichnet, daß der als Formdichtung ausgebildete Dichtring (4) als überwindbarer Anschlag ausgebildet ist und insbesondere durch eine schräge Anschlagfläche (31) des sie beaufschlagenden Druckringes (29) und/oder durch die Anschlagfläche (33) des Druckringes (6) in Wirkstellung übergriffen ist und in Endstellung nach dem Verpressen auf der unteren Anlage- oder Anschlagfläche aufsitzt.

35. Steckverbindung nach einem der Ansprüche 1 bis 34, dadurch gekennzeichnet, daß wenigstens zwei Dichtringe (4) in Einsteckrichtung in axialer Richtung hintereinanderliegend angeordnet und an dem eingesteckten Rohr (2) wenigstens zwei in axialer Richtung hintereinanderliegende, in ihrem Abstand etwa dem Abstand der Dichtringe (4) entsprechende Dichtzonen vorgesehen sind.

36. Steckverbindung nach einem der vorstehenden Ansprüche, dadurch gekennzeichnet, daß miteinander übereinstimmend geformte und/oder bemessene Dichtringe (4) in axialer Richtung hintereinanderliegen und zwischen den Dichtringen (4) insbesondere ein Druckring (29) angeordnet ist.

37. Steckverbindung nach einem der vorstehenden Ansprüche, dadurch gekennzeichnet, daß zumindest ein Teil der Anlage- oder Anschlagflächen (30,32; 31,33) an einem oder beiden Druckringen und/oder in der Aufnahmehülse (3) - im Längsschnitt der Aufnahmehülse (3) gesehen - zumindest bereichsweise kegelig oder konvex oder konkav gekrümmt sind und/oder daß die Anschlagfläche(n) (33,31) des/der Druckringe (6,29) dem jeweiligen Dichtring nur im radial mittleren bis äußeren oder aber im radial gesamten Bereich der Außenkontur des Dichtringes angepaßt sind.

38. Steckverbindung nach einem der Ansprüche 1 bis 37, dadurch gekennzeichnet, daß die Dichtringe (4) und der insbesondere zwischen ihnen befindliche Druckring (29) in derselben in axialer Richtung durchgehenden, vorzugsweise zylindrischen Aussparung gleichbleibenden Innenquerschnittes der Aufnahmehülse (3) axial hintereinander angeordnet sind.

39. Steckverbindung nach einem der Ansprüche 1 bis 38, dadurch gekennzeichnet, daß die Anlagefläche (30) für den tiefer in der Aufnahmehülse (3) liegenden Dichtring (4) eine Ringfläche ist, die in Einsteckrichtung gesehen mit der zylindrischen Innenwandung der Aufnahmehülse (3) zumindest einen rechten Winkel oder einen spitzen Winkel bildet, bei welchem diese Anlagefläche (30) von ihrem kleineren Durchmesser ausgehend in Einsteckrichtung zumindest bereichsweise schräg nach außen verläuft und in radialer Richtung einen Hinterschnitt bildet.

40. Steckverbindung nach einem der Ansprüche 1 bis 39, dadurch gekennzeichnet, daß als Druckring (29) zwischen zwei Dichtringen (4) ein Zwischenring vorgesehen ist, dessen Anschlagfläche (31) an dem in Einsteckrichtung hinteren Dichtring (4) in radialer Richtung von innen nach außen unter einem rechten Winkel oder entgegen der Einsteckrichtung zumindest teilweise schräg verläuft, so daß diese Anschlagfläche (31) in ihrem radial äußeren Bereich der Einstecköffnung der Aufnahmehülse (3) näher als in ihrem radial inneren Bereich angeordnet ist, also für den in Einsteckrichtung hinteren Dichtring (4) einen sich in radialer Richtung axial erweiternden Hinterstich bildet.

41. Steckverbindung nach einem der Ansprüche 1 bis 40, dadurch gekennzeichnet, daß die den in Einsteckrichtung hinteren, tiefer liegenden Dichtring (4) in axialer Richtung abstützende Anlagefläche (30) und die an dem Druckring (29) befindliche, diesen Dichtring (4) axial beaufschlagende Anschlagfläche (31) jeweils in radialer Richtung zumindest teilweise nach außen schräg voneinander zurückweichen und der Querschnitt des den in Einsteckrichtung hinteren Dichtringes (4) haltenden Ringraumes in radialer Richtung eine oder zwei einander entgegengesetzte axiale Erweiterungen nach außen hat.

42. Steckverbindung nach einem der Ansprüche 1 bis 41, dadurch gekennzeichnet, daß die den in Einsteckrichtung vorderen Dichtring (4) beaufschlagende Anlagfläche (32) des Druck- oder Zwischenringes (29) und die Anschlagfläche (33) des in Einsteckrichtung vor dem vorderen Dichtring (4) liegenden weiteren Druckringes (6;26) in rechtwinklig zur Einsteckrichtung angeordneten Ebenen liegen oder - nach beliebigen Richtungen - wenigstens teilweise schräg verlaufen.

43. Steckverbindung nach einem der Ansprüche 1 bis 42, dadurch gekennzeichnet, daß die Anschlagfläche (33) des in Einsteckrichtung vorderen Druckringes (6;26) für den vorderen Dichtring (4) von der Rohrseite oder der Innenseite entgegen der Einsteckrichtung radial nach außen in dem Sinne schräg verläuft, daß sich der Aufnahmeraum für den vorderen Dichtring (4) in radialer Richtung nach außen axial erweitert.

44. Steckverbindung nach einem der Ansprüche 1 bis 43, dadurch gekennzeichnet, daß der Querschnitt des Zwischenraumes zwischen dem ersten und dem zweiten Druckring zumindest bereichsweise etwa trapezförmig ist, wobei sich dieser Zwischenraum in radialer Richtung von innen nach außen verengt oder erweitert.

45. Steckverbindung nach einem der Ansprüche 1 bis 44, dadurch gekennzeichnet, daß der zwischen zwei Dichtringen (4) befindliche Druckring (29) zumindest teilweise einen trapezförmigen Querschnitt hat, der sich radial von innen nach außen oder gegebenenfalls von außen nach innen zumindest teilweise verjüngt.

46. Steckverbindung nach einem der vorstehenden Ansprüche, dadurch gekennzeichnet, daß die Druckfläche (33) und die Anlagefläche (32) für den in Einsteckrichtung vorderen Dichtring (4) zwischen dem vorderen Druckring (6;26) und dem Zwischen- oder Druckring (29) schräg von innen entgegen der Einsteckrichtung nach außen verlaufen.

47. Steckverbindung nach einem der vorstehenden Ansprüche, dadurch gekennzeichnet, daß der oder die Dichtringe (4) selbst als überwindbarer Anschlag zu Erreichung der Steckgebrauchsstellung dienen und die Durchgangsbohrung des oder der Dichtringe (4) erst bei dem Preßvorgang eingeengt wird.

48. Steckverbindung nach einem der vorstehenden Ansprüche, dadurch gekennzeichnet, daß der Dichtring (4) zuerst an seinem radial inneren Bereich beaufschlagt ist und so eine eingeengte Durchgangsbohrung gebildet ist, die von dem Rohr (2) zu überwinden ist.
